(19) Europäisches Patentamt
European Patent Office
Office européen des brevets

(11) EP 2 678 651 B1

(12) EUROPEAN PATENT SPECIFICATION

(45) Date of publication and mention
of the grant of the patent:
**23.08.2017 Bulletin 2017/34**

(51) Int Cl.:
***G01K 17/00*** (2006.01)

(21) Application number: **12748936.7**

(22) Date of filing: **22.02.2012**

(86) International application number:
**PCT/US2012/026163**

(87) International publication number:
**WO 2012/116092 (30.08.2012 Gazette 2012/35)**

(54) **MEMS-BASED CALORIMETER**

MEMS-BASIERTES KALORIENMESSGERÄT

CALORIMÈTRE À BASE DE MEMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2011 US 201161445414 P**
**22.06.2011 US 201161500011 P**
**11.07.2011 US 201161506509 P**
**11.07.2011 US 201161506514 P**
**23.09.2011 US 201161538725 P**
**23.09.2011 US 201161538729 P**
**30.09.2011 US 201161542147 P**
**03.10.2011 US 201161542651 P**
**19.12.2011 US 201161577452 P**

(43) Date of publication of application:
**01.01.2014 Bulletin 2014/01**

(73) Proprietor: **The Trustees of Columbia University in the City of**
**New York**
**New York, NY 10027 (US)**

(72) Inventors:
• **LIN, Qiao**
**New York, NY 10027 (US)**
• **WANG, Bin**
**New York, NY 10027 (US)**

(74) Representative: **Rambelli, Paolo et al**
**Jacobacci & Partners S.p.A.**
**Corso Emilia 8**
**10152 Torino (IT)**

(56) References cited:
WO-A1-2009/059110     US-A- 6 079 873
US-A1- 2004 180 204     US-B1- 7 564 267
US-B2- 6 561 692

• BIN WANG ET AL: "A MEMS differential scanning calorimeter for thermodynamic characterization of biomolecules", IEEE 24TH INTERNATIONAL CONFERENCE ON MICRO ELECTRO MECHANICAL SYSTEMS (MEMS 2011), IEEE, US, 23 January 2011 (2011-01-23), pages 821-824, XP031982538, DOI: 10.1109/MEMSYS.2011.5734551 ISBN: 978-1-4244-9632-7
• LI WANG ET AL: "A MEMS Thermal Biosensor for Metabolic Monitoring Applications", JOURNAL OF MICROELECTROMECHANICAL SYSTEMS., vol. 17, no. 2, 1 April 2008 (2008-04-01), pages 318-327, XP055259342, US ISSN: 1057-7157, DOI: 10.1109/JMEMS.2008.916357
• WANG ET AL.: 'Demonstration of MEMS-based differential scanning calorimetry for determining thermodynamic properties of biomolecules.' SENSORS AND ACTUATORS B, [Online] vol. 134, no. 2, 2008, pages 953 - 958, XP025429996 Retrieved from the Internet: <URL:http://biomems.me.columbia.edu/research/PDFsrour/Li_08_Demonstration of MEMS-based_Differential_Scanning_Calorimetry.pdf > [retrieved on 2012-06-14]

## Description

Background

Differential scanning calorimetry (DSC) is a thermoanalytical technique that measures heat generated or required in thermally active processes as the temperature of a sample is varied. When applied to biochemical systems, DSC can provide a label-free method to determine the thermodynamic properties of a wide variety of biomolecular interactions and conformational transition. DSC instruments, however, can be cumbersome and require large sample consumption, which has hindered the widespread application of DSC to biomolecular characterization.

Microelectromechanical Systems (MEMS) are small integrated devices or systems that combine electrical and mechanical components very small mechanical devices. MEMS technology is based on fabrication technologies that can realize miniaturization, multiplicity, and microelectronics. A calorimeter based on MEMS technology is described in B Wang et Al, "A MEMS differential scanning calorimeter for thermodynamic characterization of biomolecules",IEEE 24TH INTERNATIONAL CONFERENCE ON MICRO ELECTRO MECHANICAL SYSTEMS (MEMS 2011), IEEE, US, 23 January 2011, pages 821-824. Many currently available MEMS calorimeters provide solid- or gas-phase or droplet-based detections. However, it can be difficult to properly handle liquid samples in a well-defined environment in the currently available MEMS calorimeters.

Alternatively, flow-through and continuous-flow MEMS calorimeters integrate microfluidic chambers or channels as biological reactors. These devices can provide controlled fluidic environments and can allow easy integration with other microfluidic functionalities or thermal sensing configurations for biochemical thermodynamic investigations. However, these devices can still require a large amount of samples while being limited by significant convective heat leakage due to the continuous flow.

In addition, calibrating existing MEMS DSC devices can be complicated due to a lack of integrated heating elements and temperature sensing. Temperature-modulated calorimetry (AC calorimetry) involves calorimetric measurements under small temporally periodic temperature variations. Such temperature modulation can allow thermal relaxation of biomolecules, and thus AC calorimetry can detect biomolecular interactions under quasi-equilibrium conditions, and allow the biochemical reaction signal to be extracted at the modulation frequency in the face of broad-band background noise. However, these chips can involve thin solid films and operating parameters which are not suitable for biomolecular characterization in solution phase.

Isothermal titration calorimetry (ITC) can measure heat generated or required for a biochemical reaction as a function of the molar reactant ratio, and has been used in applications such as drug discovery and biotherapeutic development. However, conventional ITC instruments can have complicated structural designs, slow thermal response, and large sample and reagent consumption.

Summary

In accordance with one aspect of the disclosed subject matter, a microdevice is provided. The microdevice includes a first thermally isolated microchamber, a second thermally isolated microchamber, and a thin film substrate. The first and second microchambers can be a sample chamber and a reference chamber, respectively. The sample and reference chambers can be identical in volume and configuration, and arranged side by side, each supported on the thin film substrate. The thin film substrate can include a thermoelectric sensor located under each of the sample and reference chambers and configured to measure the temperature differential between the sample and reference chambers. The thin film substrate can also include a polymeric diaphragm made of a material having a glass transition temperature greater than 150 °C and thermal decomposition temperature greater than 250 °C.

In some embodiments of the microdevice, the thermoelectric sensor includes a thermocouple having a thermoelectric sensitivity of greater than 80 μV/°C. In other embodiments, the thermoelectric sensor is configured as a thin-layer thermopile including a plurality of elongated segments of dissimilar materials, adjacent segments of dissimilar materials being joined together at opposite ends, thereby forming thermocouple junctions. For example, the dissimilar thermoelectric materials can include n-type and p-type bismuth telluride, and n-type and p-type antimony telluride. In one exemplary embodiment, the thermoelectric materials are antimoby-bismuth (Sb-Bi).

The material of the polymeric diaphragm for the thin film substrate can have a tensile strength of greater than 55 MPa and Young's Modulus greater than 500 MPa. For example, the polymeric diaphragm can be made from a material such as but not limited to polyimide, parylene, polyester, and polytetrafluoroethylene. In one embodiment, the polymeric diaphragm is made from polyimide.

In certain embodiments, the thin film substrate of the microdevice can further include a first microheater and a first temperature sensor, each aligned under the first thermally isolated microchamber; and a second microheater and a second temperature sensor, each aligned under the second thermally isolated microchamber. In such embodiments, the thermocouple junctions of the thermoelectric sensor can be located near the center of each of the first and second thermally isolated microchambers, and vertically aligned with the first temperature sensor and the second temperature sensor, respectively. The microheaters and the temperature sensors can be in a form of a thin layer of deposited metal/alloy or metals/alloys impregnated in the thin film substrate. The microheaters can be patterned to provide uniform heating for the microchambers.

In some embodiments, the chambers of the microdevice are defined by a surrounding wall made from polydimethylsiloxane (PDMS). The thin film substrate of the microdevice can include a top layer made from a mixture of PDMS and the material from which the polymeric diaphragm is made.

In some embodiments, the microdevice further includes a first introduction channel and a second introduction channel. Each of the first introduction channel and a second introduction channel can be configured to provide passive chaotic mixing for a solution flowing through the introduction channel. For example, the first and/or the second introduction channel can include a portion having a serpentine shape, and can further include internal ridges sufficient for creating turbulence in the solution flowing through the first or the second introduction channel.

In accordance with another aspect of the disclosed subject matter, a method of determining a thermal property of an analyte is provided. A sample material containing an analyte is provided in the sample chamber, and a reference material not containing the analyte is provided in the reference chamber. A thermal enclosure enclosing the microdevice is heated at a predetermined temperature scanning rate. A thermal property of the analyte can be determined based on the measured temperature differential between the sample chamber and reference chamber.

In some embodiments of the method, a temporally periodic variation in the heating power can be provided during the heating of the thermally isolating enclosure. Providing the temporally periodic variation in the heating power can be performed using the microheaters of the microdevice for temporally modulated heating. The temporal modulation of the heating can be controlled by a waveform generator.

In accordance with another aspect of the disclosed subject matter, a method of determining heat involved in a reaction between at least two substances is disclosed.. A sample solution containing a mixture of a first substance and a second substance is provided in the sample chamber, a reference solution is provided in the reference chamber. A thermal enclosure enclosing the microdevice is maintained at a constant temperature. The heat involved in the reaction between the first substance and the second substance at the given temperature can be determined based on the measured temperature differential between the sample chamber and reference chamber.

The reaction between the first and second substances can be a chemical reaction or a physical binding system, for example, ligand-protein binding. The thermal enclosure temperature can be varied such that the heat involved in the reaction can be determined at different temperature. Likewise, the concentration ratio between the two substances can also be varied such that reaction stoichiometry can be determined by the heat measured at different concentration ratios. The sample and/or reference solution can be fed into the respective chambers through an introduction channel as described above, which can provide passive mixing.

Brief D escription of the Drawings

Figs. 1a-1c depict a schematic of a microdevice according to some embodiments of the disclosed subject matter, in top (1a), isometric (1b), and sectional (1c) views.

Figs. 2a-2e depict a procedure for the fabrication of the microdevice according to some embodiments of the disclosed subject matter.

Fig. 3 is a schematic diagram illustrating the principle of AC differential scanning calorimetry according to the disclosed subject matter.

Figs. 4a and 4b are schematics of a microdevice according to some embodiments of the disclosed subject matter for isothermal titration calorimetry.

Fig. 5 Are images of a microdevice fabricated according to one embodiment of the disclosed subject matter: (a) the PDMS housing structure and air gap; (b) the solid substrate; (c) the thermopile, integrated microheater and temperature sensor embedded in the thin film substrate; and (d) the thermopile junctions.

Fig. 6a is a schematic diagram of a testing setup for a calorimetric measurement using a microdevice according to some embodiments of the disclosed subject matter.

Fig. 6b shows the details of a custom-built, temperature-controlled thermal enclosure as compared with a schematic diagram of the thermal enclosure, according to some embodiments the disclosed subject matter.

Fig. 7 is a plot showing the thermopile output voltage from a microdevice according to some embodiments the disclosed subject matter in response to constant temperature difference between the thermopile's hot and cold junctions.

Fig. 8 is a plot showing a steady-state response (in terms of thermopile output voltage) from a microdevice according to some embodiments the disclosed subject matter in response to constant differential power between the two chambers of the microdevice.

Fig. 9 is a plot showing the transient response of a microdevice according to some embodiments the disclosed subject matter with respect to a step differential power.

Fig. 10 is a plot showing the output of a microdevice according to some embodiments the disclosed subject matter as a function of temperature in a temperature scan during which the unfolding of lysozyme occurs.

Figs. 11a and 11b are plots showing partial specific heat capacity (11a) and change of molar enthalpy (11b) as a function of temperature during the unfolding of lysozyme, as measured by the microdevice according to some embodiments the disclosed subject matter.

Figs. 12a and 12b are plots showing the output of a microdevice according to some embodiments the disclosed subject matter (10a) and change of molar enthalpy as a function of temperature during the unfolding of lysozyme at varying temperature scanning rates.

Fig. 13 is a schematic diagram showing an experiment setup for AC-DSC measurements according to some embodiments of the disclosed subject matter.

Fig. 14 is a plot showing the output voltage of the thermopile of a microdevice according to some embodiments of the disclosed subject matter in response to constant differential temperature between its hot and cold junctions.

Fig. 15 is a plot showing a steady-state response (in terms of thermopile output voltage) from a microdevice according to some embodiments the disclosed subject matter in response to constant differential power between the two chambers of the microdevice.

Fig. 16 is a plot showing the transient response of a microdevice according to some embodiments the disclosed subject matter with respect to a step differential power.

Fig. 17 is a plot showing the frequency dependence of thermopile voltage (baseline subtracted) of a microdevice according to some embodiments the disclosed subject matter, where the sample chamber was filled with lysozyme (20mg/mL) and the reference chamber was filled with 0.1 M Glycine-HCl buffer (pH 2.5).

Figs. 18a and 18b are plots showing changes in (18a) amplitude, and (18b) phase, of the thermopile voltage as a function of temperature during the unfolding of lysozyme at different lysozyme concentrations and AC modulating frequencies, as measured on a microdevice according to some embodiments the disclosed subject matter.

Fig. 19 is a plot showing specific heat capacity of lysozyme as a function of temperature during the unfolding of lysozyme at different lysozyme concentrations and AC modulation frequencies, as measured on a microdevice according to some embodiments the disclosed subject matter.

Fig. 20 is a plot showing a comparison between a DC-DSC measurement and an AC-DSC measurement for specific heat capacity of lysozyme during its unfolding process, using a microdevice according to some embodiments the disclosed subject matter.

Fig. 21 are images of certain elements of a microdevice for isothermal titration calorimetry according to some embodiments of the disclosed subject matter.

Fig. 22 is a schematic diagram showing the experimental setup for isothermal titration calorimetry according to some embodiments of the disclosed subject matter.

Figs. 23a and 23b are plots showing calibration results of a microdevice according to some embodiments of the disclosed subject matter for performing isothermal titration calorimetry: transient response to a step differential power (23a), and steady-state response to a constant differential power (23b).

Fig. 24 is a plot showing a time-resolved output of a microdevice according to some embodiments of the disclosed subject matter upon introduction of 5 mM 18-C-6 and 4 mM $BaCl_2$ (each 0.5 $\mu$L), compared with measurement of 5 mM 18-C-6 titrated by DI water (plotted with a 4$\mu$V offset for clarity).

Figs 25a and 25b are plots for the output of a microdevice according to some embodiments of the disclosed subject matter in the isothermal titration calorimetric measurement of the binding of 5 mM 18-C-6 and $BaCl_2$ at continuous injections with a series of molar ratios (25a); and calculated heat of the binding of 18-C-6 and $BaCl_2$ as a function of molar ratio. The fitted curve is based on a one-site binding model.

Fig. 26 is a plot showing the biochemical heat of binding of 18-C-6 and $BaCl_2$ as a function of molar ratio at temperatures of 23 and 35°C, as calculated from the output of a microdevice according to some embodiments of the disclosed subject matter.

Detailed Description

In accordance with one aspect of the disclosed subject matter, a microdevice is provided. The microdevice includes a first thermally isolated microchamber, a second thermally isolated microchamber, and a thin film substrate. The first and second microchambers are also referred herein as the sample chamber and reference chamber, respectively. The sample and reference chambers are identical in volume and configuration, and arranged side by side, each supported on the thin film substrate. The thin film substrate includes a thermoelectric sensor located under each of the sample and reference chambers and configured to measure the temperature differential between the sample and reference chambers.

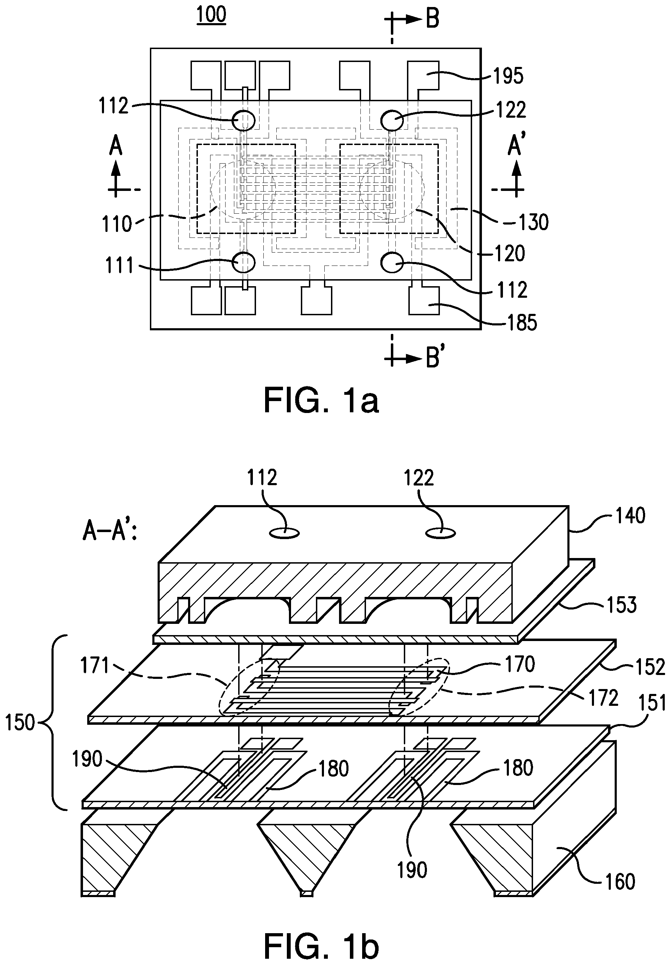

Figs 1a-1c depict an illustrative embodiment of the microdevice of the disclosed subject matter. The microdevice is also referred to as MEMS DSC device herein. The microdevice 100 includes two identical microchambers 110 and 120, which can hold sample and reference materials for calorimetric measurements. For easy reference, these microchambers are also referred to herein as the sample chamber and reference chamber, respectively, and collectively, "calorimetric chambers," or simply "chambers" Each of the sample and reference chambers is connected to an inlet port (111, 121) and an outlet port (112, 122) by microfluidic channels. The material for the housing of the chambers (140) can be made of any material suitable for microfabrication and thermal isolation. In certain embodiments, Polydimethylsiloxane (PDMS) is selected as the material to fabricate the calorimetric chambers for its ease of fabrication and packaging as well as biocompatibility. The air cavities (130) provides extra thermal isolation for the chambers.

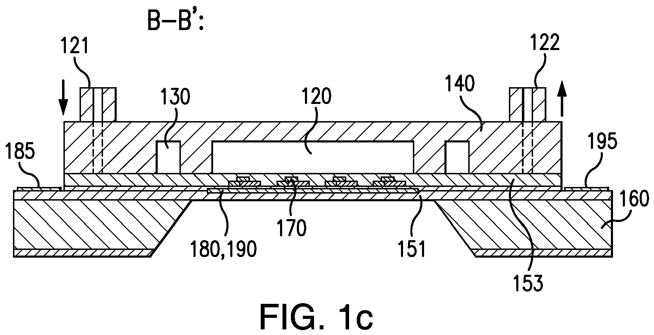

Both of the chambers are supported on a thin film substrate (150). The thin film substrate (150) along with air cavities (130) surrounding the chambers, provide thermal isolation that enables sensitive calorimetric measurements. The thin film (150) can include multiple polymeric layers or diaphragms (151, 152, 153). The layers 151, 152, 153 are integrated as shown in Fig. 1c, but for purpose of illustration, are shown in Fig. 1b as separate layers. Both of layers 151 and 152 can be made from a material have good thermal isolation property, as well as thermal and mechanical stability to withstand the thermal cycles required by repeated calorimetric measurements. In particular embodiments, the polymeric diaphragm can be made of a material having a glass transition temperature greater than 150 °C and thermal decomposition temperature greater than 250 °C. For example, the material can be polyimide, parylene, polyester, and polytetrafluoroethylene, etc. The polymeric diaphragm can have a tensile strength of greater than 55 MPa, and/or Young's Modulus greater than 500 MPa. In particular embodiments, polyimide is selected as the diaphragm material because of to its excellent mechanical stiffness (Young's modulus: 2.5 GPa) and thermal stability (glass transition temperature: 285°C).

To improve the adhesion between the housing material and the thin film substrate, an interfacing layer 153 can be made from a mixture of the material for layer 151 and/or 152, e.g., a mixture of polyimide/PDMS. The thin film substrate can be supported on another solid substrate (160), e.g., a silicon wafer. To improve thermal isolation, the solid substrate in the area underneath the bottom side of the thin film substrate corresponding to a cross section of each of the chambers can be removed, such that the portion of the thin film substrate under each of the chambers does not contact the solid substrate (i.e., it only contacts air, which is believed the best thermal insulator).

A thermoelectric sensor can be coated on, embedded, or otherwise included in the thin film substrate and configured to measure the temperature differential between the two chambers. For example, a thin layer of thermopile (170) can be included between the polymeric layers (152, 153). As illustrated in Figs. 1b and 1c, the thermopile can include a plurality of elongated segments of dissimilar materials, where adjacent segments of dissimilar materials are joined together at opposite ends, thereby forming thermocouple junctions (171 and 172).

The thermocouple junctions underneath each chamber can be aligned to the central axis of each chamber. The material for the thermopile can include a variety of dissimilar pairs of metals, e.g., antimony-bismuth (Sb-Bi), or other pairs of materials providing high thermoelectric efficiency, such as n-type and p-type bismuth telluride, and n-type and p-type antimony telluride. For example, the thermoelectric sensor can have a thermoelectric sensitivity of greater than 80 $\mu$V/°C per thermocouple. In particular embodiments, antimony (Seebeck coefficient: 43 $\mu$V/K) and bismuth (Seebeck coefficient: -79 $\mu$V/K) are selected for the thermopile material due to their high thermoelectric sensitivities and ease of fabrication.

The thin film substrate can further include two sets of microheaters (180) and temperature sensors (190) which are aligned underneath the two chambers (110, 120), respectively. The temperature sensors (190) can monitor the chamber temperatures in real time, and the microheaters (180) can provide heating to the chambers to generate a constant differential power for calorimetric calibration. Both of the microheaters (180) and temperature sensors (190) can be embedded in the thin film, but vertically away and insulated from the thermopile (170). For example, they can be embedded between layers 151 and 152. The contact pad (195) for the temperature sensor and the contact pad for the microheaters (185) can extend outside of the chamber housing structure for external electrical connection. Although shown in Figs 1b and 1c as situated on the same layer, the microheaters (180) and the temperature sensors (190) can also be situated on different layers. For precise temperature sensing, particularly in device calibration, the thermopile junctions (171, 172) can be aligned with the temperature sensors (190). The microheaters (180) can be patterned in a way to provide uniform heating of the chambers, for example, in a meandering pattern underneath the bottom area of the chambers. The material of the microheaters can be chosen from a variety of metals or metal alloys, for example, chromium/gold (Cr/Au).

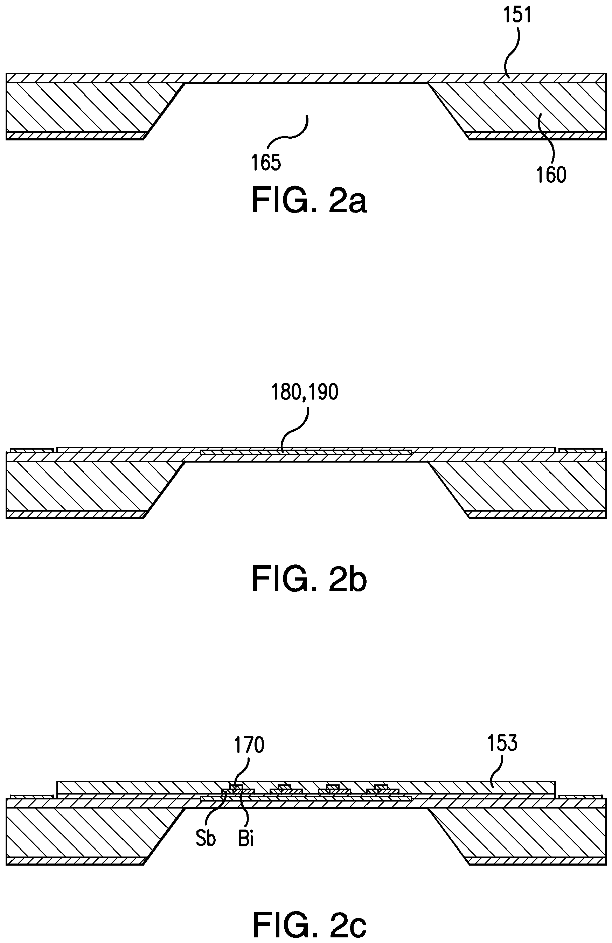

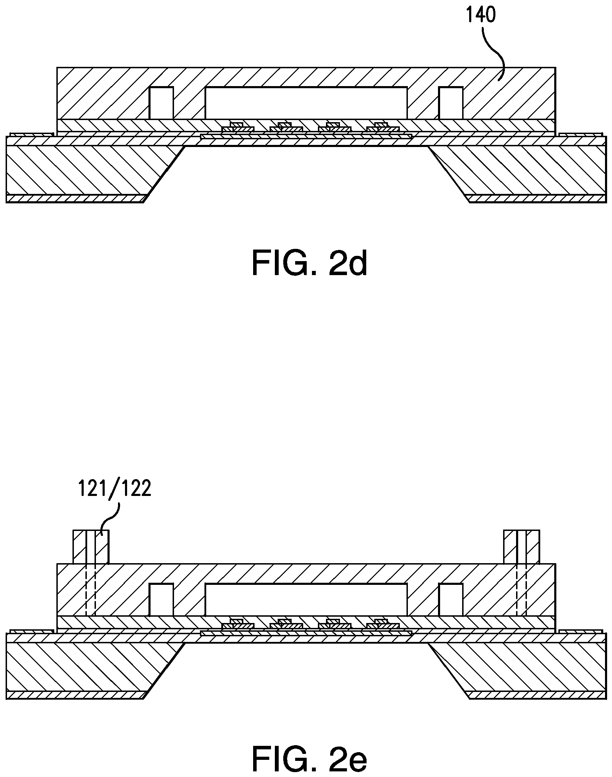

In one embodiment, the microdevice illustrated in Figs. 1a-c can be fabricated by a procedure as outlined below. A solid substrate (160), such as silicon wafer, is provided. A polymeric diaphragm (151), e.g., a polyimide film, can be coated on the solid substrate, e.g., by spin-coating (Fig. 2a). A pair of cavities (165) can be etched by TMAH into the backside of the solid substrate in the areas that correspond to the calorimetric chambers. After the curing of the polymeric diaphragm, microheaters (180) and temperature sensors (190) can be deposited by thermal evaporation of a metal or metal alloy, e.g., Cr/Au. This is followed by coating another polymeric diaphragm (152) on top of the microheaters and temperature sensors (Fig. 2b). Subsequently, the thermoelectric sensor (170), e.g., a thermopile, can be thermally evaporated and patterned using a standard lift-off process, and the thermoelectric sensor is further coated by another polymeric layer (153), e.g., a layer containing polyimide-PDMS mixture (Fig. 2c). The chamber housing structure (140) can then be fabricated, e.g., from PDMS using micromolding techniques on top of the thin film substrate, thereby forming the calorimetric chambers (Fig. 2d). Microfluidic structure such as microchannels connecting the chambers to the inlet and outlet ports (121/122) can also be fabricated (Fig. 2e). The residual silicon layer on the backside of the thin film can then be removed (Fig. 2e), thereby forming the freestanding thin film substrate portions under each of the chambers.

In accordance with another aspect of the disclosed subject matter, a method of determining a thermal property of an analyte is provided. The method includes providing a microdevice as described above, providing a thermal enclosure enclosing the microdevice; loading a sample material containing an analyte into the first microchamber; loading a reference material into the second microchamber, the reference material does not contain the analyte; heating the thermal enclosure at a predetermined temperature scanning rate; and determining a thermal property of the analyte based on the measured temperature differential between the first microchamber and the second microchamber. The microdevice and the method of using the microdevice for calorimetric measurement are further described in conjunction with each other in the Examples below. It is appreciated that the microdevice including any of the specific features described below can be used in the method of using the microdevice, and vise versa.

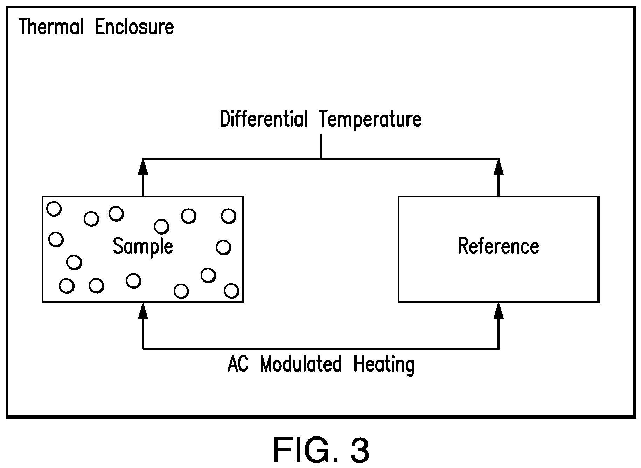

In some embodiments of the above method, a temporally periodic variation, or AC modulated heating, can be introduced to the reference and sample materials during the heating of the thermal enclosure, as illustrated in Fig. 3. This can lead to temperature modulation, which allows thermal relaxation of biomolecules, as well as allow the biochemical reaction signal to be readily extracted at the modulation frequency in the broad-band background noise. The temperature modulation can be achieved by using the microheaters included in the thin film substrate of the microdevice, controlled by a wave generator which can provide different frequency, magnitude, and other parameters for the on-chip heating.

In accordance with another aspect of the disclosed subject matter, a method of determining heat involved in a reaction between at least two substances is provided. The method includes: providing a MEMS DSC device as described above; providing a thermal enclosure enclosing the microdevice; feeding a sample solution into the first thermally isolated microchamber, wherein the sample solution is prepared by mixing a first substance with a second substance; feeding a reference solution into the second thermally isolated microchamber, the reference solution does not contain at least one of the first and the second substances; and determining the heat involved in the reaction between the first substance and the second substance based on the measured temperature differential between the sample chamber and the reference chamber. During the measurement, the temperature of the thermal enclosure (that encloses the microdevice) can be maintained constant. Thus, the method is also referred to as isothermal titration calorimetry (ITC). The reaction between the first and second substances can be a chemical reaction or physical binding. Thus, the two substances can be any of the variety of chemicals, biomolecules or other molecules that are reactive to each other, receptor-ligand, protein-enzyme, acid-base, etc., wherein the reaction between the two substances either generate, or absorb measurable heat.

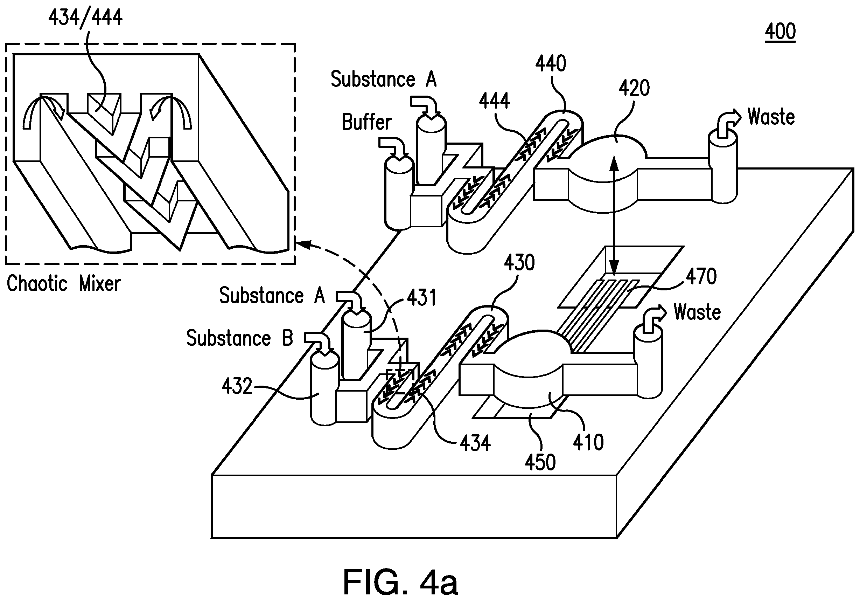

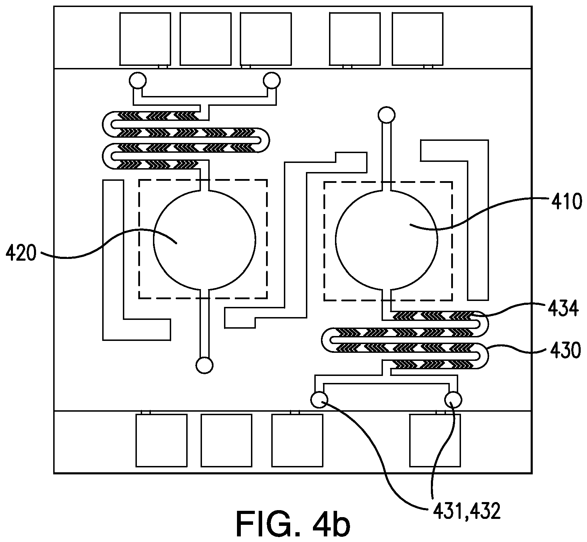

Fig. 4 is a schematic representation of the exploded view of a microdevice that is particularly suited for the ITC. The microdevice (400) includes a sample chamber (410) and a reference chamber (420), both situated on the thin film substrate (450) which includes a thermopile (470) for measuring the temperature differential of the sample chamber and the reference chamber during a heat scan. To facilitate mixing of the first and second substances (A and B), the microdevice further includes introduction channels (430, 440) for each of the sample and reference chambers (410, 420). Each of the introduction channels has two inlets (431, 432; 441, 442). Each of the introduction channels can be configured to provide passive chaotic mixing for a solution flowing through the channel. For example, as schematically shown in Figs. 4a and 4b, the introduction channels (430, 440) can include a portion having a serpentine shape. Moreover, the introduction channels (430, 440) can includes internal ridges (434, 444) sufficient for creating turbulence in the solution flowing through channels. For example, as shown in the inlet of Fig. 4a, the introduction channels can include herringbone-shaped ridges in the ceiling.

The disclosed microdevice and methods of fabrication and use thereof are further illustrated in the examples below, which should not be considered as limiting the scope of the disclosed subject matter in any way.

Example 1: Fabrication of Microdevice

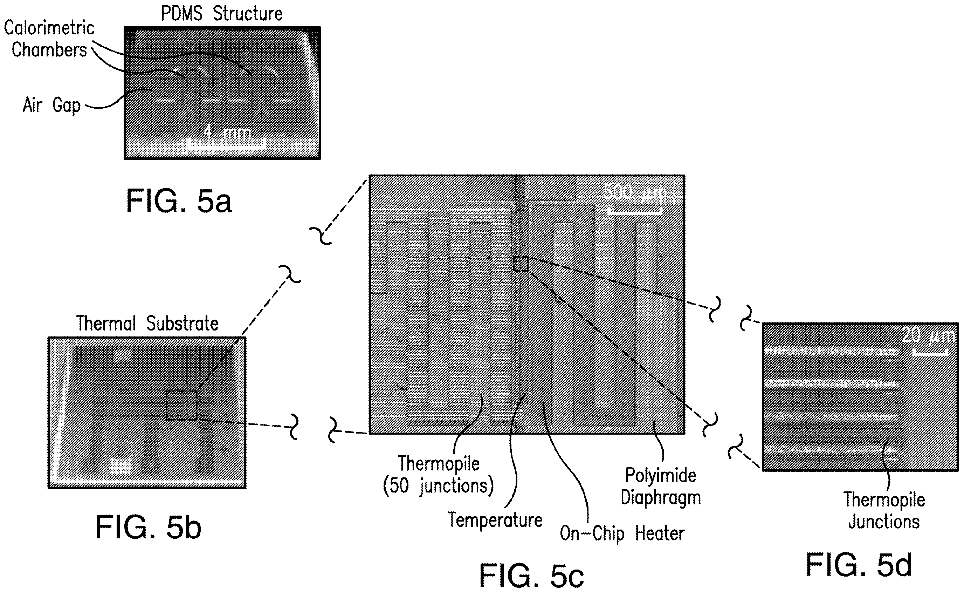

This example illustrates a procedure to fabricate the microdevice, which substantially follows the outlined procedure described above in connection with Fig. 2. In particular, a 6-$\mu$m thick polyimide film was spin-coated on a silicon wafer (precoated with silicon dioxide). The TMAH etching into the backside of the wafer in the areas that correspond to the calorimetric chambers created an approximately 50 $\mu$m-thick residual wafer layer. After the curing of the polyimide, a chromium/gold thin film (5/200 $\mu$m) was deposited by thermal evaporation onto the polyimide layer. A second layer of polyimide was then coated on the microheaters and temperature sensors. Subsequently, Sb and Bi thin films (0.5 and 1.2 $\mu$m) were thermally evaporated and patterned using a standard lift-off process to form a 50-junction thermopile using a standard lift-off process. A layer containing polyimide-PDMS mixture was further coated on the thermopile. The chamber housing structure was fabricated from PDMS using micromolding techniques on top of the thin film substrate, thereby forming the calorimetric chambers the calorimetric chambers each of cylindrical shape and 1 μL in volume (diameter: 2.5 mm and height: 200 μm), with a center-to-center separation of 4 mm. Xenon difluoride (XeF$_2$) gas-phase isotropic etching was used to remove the residual silicon layer on the wafer substrate from the backside of the thin film substrate. The integrated resistive microheaters each had a nominal resistance of 40 Ω and the temperature sensors each had a nominal resistance of 55 Ω. Shown in Fig. 5 are the images of the PDMS housing structure and solid thermal substrate, as well as micrographs of the thermopile, integrated microheater and temperature sensor embedded in the thin film substrate.

Example 2. Calorimetric Measurement

In this example, the microdevice as fabricated according to Example 1 was calibrated and used to measure thermodynamic properties of certain biomolecules, e.g., thermodynamics of the unfolding of a protein.

*A. Principle*

DSC can measure differential heat capacity, i.e., the heat capacity difference between a sample and a reference material, as a function of temperature. When the sample and reference materials are subjected to identical temperature scanning, i.e., their temperatures are varied at a predetermined rate within a range of interest, the thermally induced activity of the sample molecules, which is either exothermic or endothermic, can cause a small temperature difference between the sample and reference materials (i.e., differential temperature or temperature differential). This differential temperature can be detected to reflect the differential power

$$\Delta P = P_s - P_r \qquad (1)$$

where $P_s$ and $P_r$ are the thermal power generated in the sample and reference materials, respectively. Therefore the differential heat capacity

$$\Delta C_p = C_{ps} - C_{pr} \qquad (2)$$

where $C_{ps}$ and $C_{pr}$ are, respectively, the heat capacities of the sample and reference materials, can be determined as:

$$\Delta C_p = \frac{\Delta P}{\dot{T}} = \frac{\Delta U}{S\dot{T}} \qquad (3)$$

where $\dot{T}$ is the time rate of the controlled temperature of sample and reference materials, U is the output from the thermoelectric sensor that is employed to detect the differential temperature, and *S* is the device's sensitivity, i.e., the output electrical voltage generated by unit differential thermal power. Therefore, interpretation of the differential heat capacity can lead to determination of the fundamental thermodynamic properties of the sample material.

*B. Device Calibration*

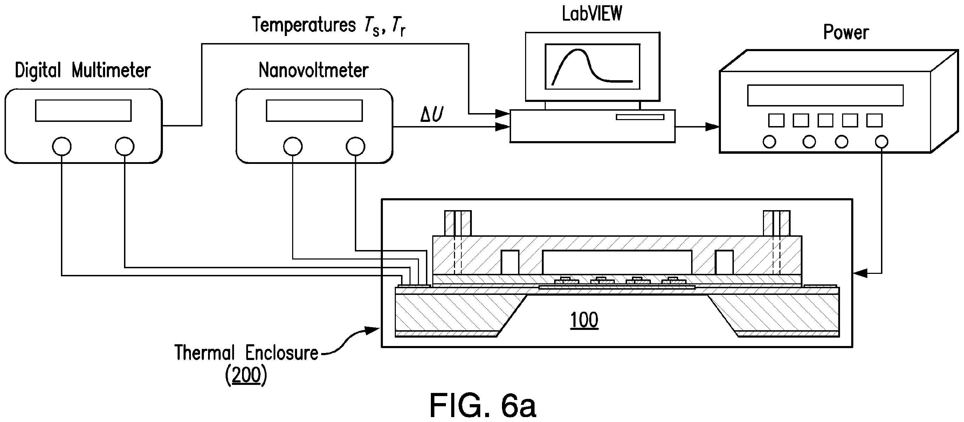

In order to measure the temperature differential between the two chambers, the thermopile need be first calibrated such that the voltage generated by the thermopile can be readily convert to temperature differential. As illustrated in Fig. 6a, to calibrate the MEMS DSC device, the on-chip microheaters were driven by a DC power supply (Agilent E3631A) and generated a constant differential heating power in the calorimetric chambers, while the temperature sensors were interrogated by a digital multimeter (Agilent 34410A) to monitor the temperatures of the calorimetric chambers. The thermopile output voltage, proportional to the differential temperature between the chambers, was measured by a nanovoltmeter (Agilent 34420A). The temperature control of the MEMS DSC device and thermoelectric measurements were automated using a personal computer via a LabVIEW-based program.

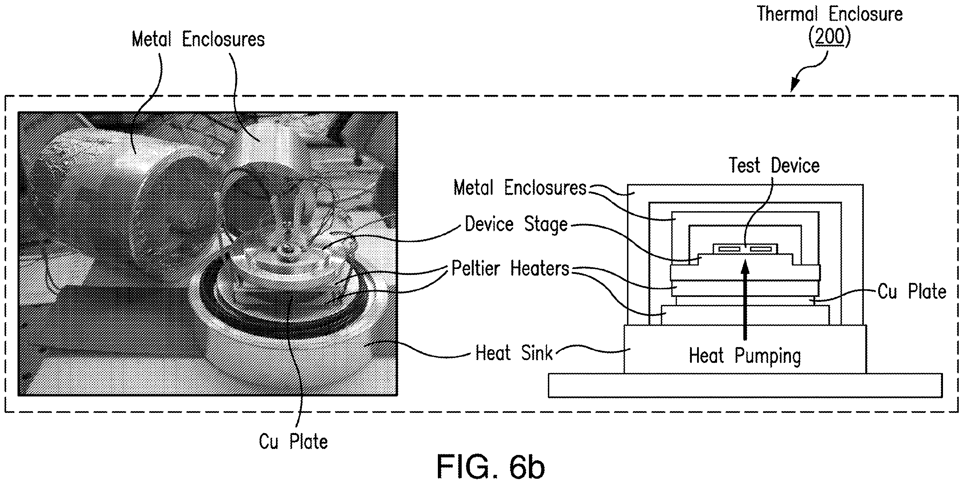

A packaged MEMS DSC device (100) was housed in a custom-built, temperature-controlled thermal enclosure (200) consisting of multiple metal enclosures surrounding a metal stage on which the device was placed (Fig. 6b). This provided temperature scanning of the sample and reference solutions, as well as thermal isolation of the device package from the environment to minimize measurement noise. Multiple Peltier devices (Melcor UT15-12-40-F2) were located underneath the device stage, and by a power supply (Agilent E3631A), to add heat to or remove heat from the device. The temperature of the sample and reference chambers was controlled in closed loop by adjusting the voltage applied to the Peltier devices according to the feedback from the on-chip temperature sensors based on, for example, a proportional-integral-derivative (PID) algorithm.

During device calibration, the sample and reference chambers were both filled with 0.1 M Glycine-HCl buffer (pH 2.5), which was the buffer later used for protein unfolding measurements. A known, constant differential power was created by activating the microheater below the sample chamber while leaving the microheater underneath the reference chamber turned off. The temperature sensors were used to measure the temperatures of the thermopile's hot and cold junctions. The device output, i.e., the thermopile output voltage, was measured as a function of time to obtain the steady-state and transient responses to the differential heating power.

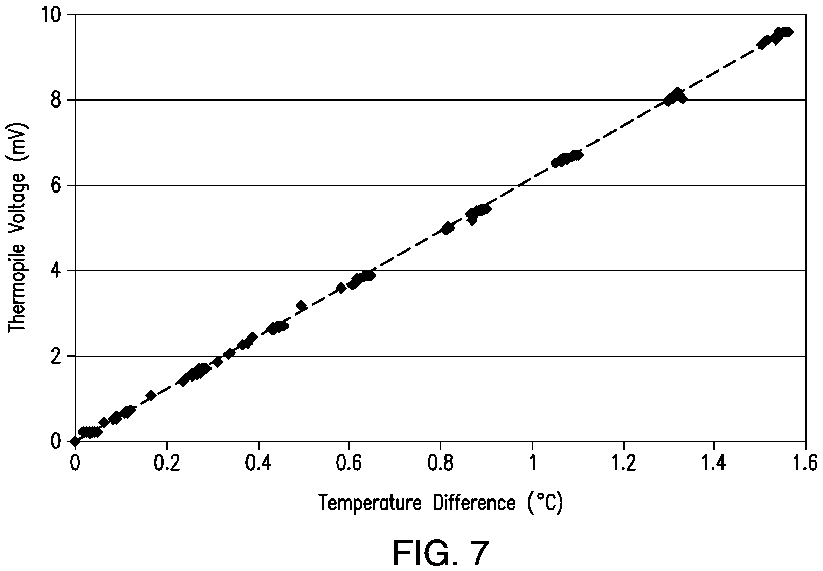

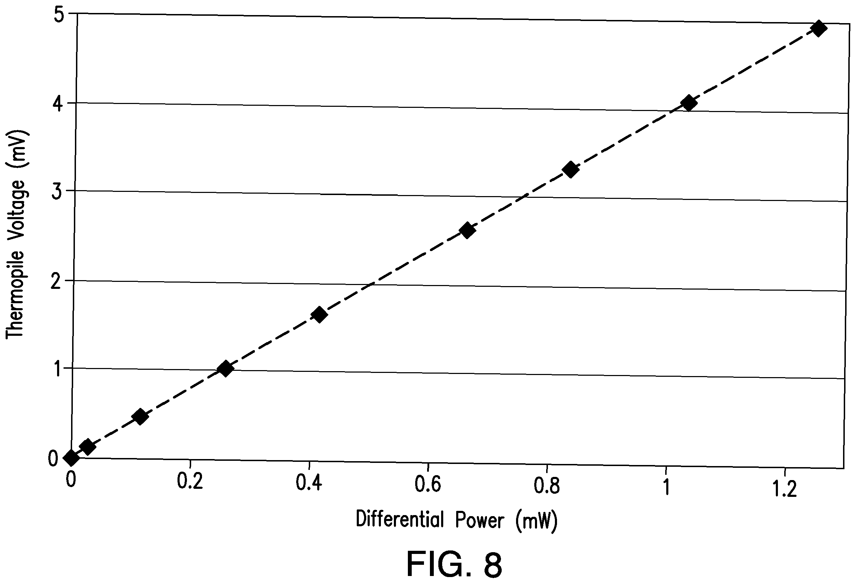

The sensitivity of the thermopile integrated in the MEMS DSC device was calibrated at varying temperature difference between the hot and cold junctions, generated by on-chip heating (using the microheater underneath the sample chamber). The thermopile differential voltage exhibited a highly linear relationship with temperature difference (Fig. 7), showing a total thermoelectric sensitivity of 6.3 mV/°C for the 50-junction thermopile. A Seebeck coefficient of 125 $\mu$V/K for each Sb-Bi thermocouple was obtained. In addition, the steady-state response of the MEMS DSC device was calibrated to varying differential power and observed again a highly linear relationship, yielding a nearly constant responsivity of $S$ = 4.0 mV/mW (Fig. 8). A root-mean-square (RMS) noise of approximately 40 nV in the device output was also observed, which was used to determine a baseline noise in the differential power. This corresponded to a detection limit of approximately 10 nW in differential thermal power measurement.

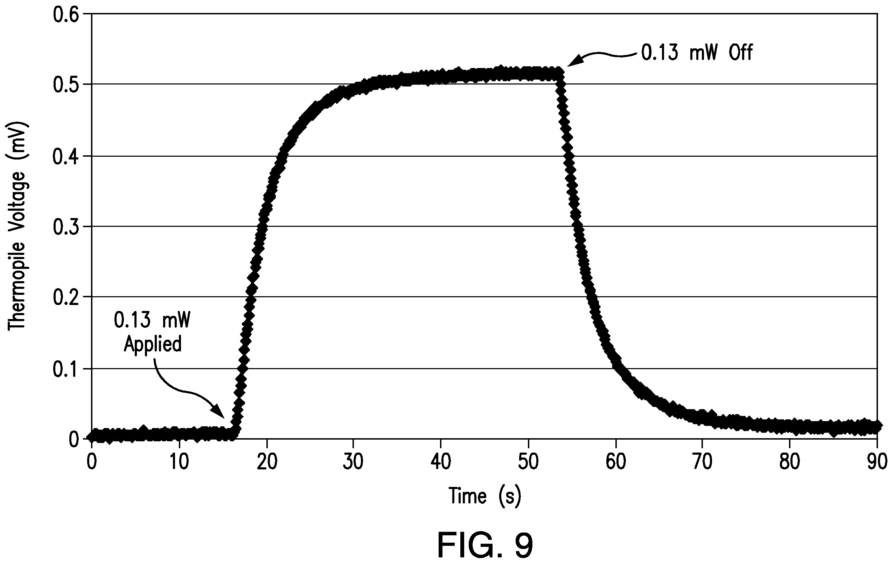

To characterize the transient response of the MEMS DSC device, a step differential power of 130 $\mu$W was initially applied to the calorimetric chambers and then turned off once the device output reached its equilibrium. The corresponding output voltage from the thermopile (Fig. 9) was found to exponentially grow with time upon the application of the differential power, while decay exponentially upon the removal of the differential power. The thermal time constant was approximately 2.0 s, calculated by fitting the experimental data to first-order exponential growth and decay functions.

*C. Calorimetric Measurements*

DSC measurements of biomolecules were performed using the calibrated microdevice, whose sample chamber and reference chamber were respectively filled with biological sample and buffer solutions, scanned in a range of temperature of interest. The temperature sensors were used to monitor the temperatures of calorimetric chambers while the device output was obtained in real time to compute the biomolecular thermal power. Before DSC measurements, the baseline in device output, i.e., the thermopile output voltage in the absence of a differential power input, during temperature scanning was measured with both calorimetric chambers filled with buffer solutions. Biological sample and buffer solutions were degassed with a vacuum chamber built in-house, metered with micropipettes, and introduced by a syringe pump (New Era Pump Systems, NE 1000).

The calibrated MEMS DSC device was employed to characterize protein unfolding, a common type of biomolecular conformational transition. For this purpose, the thermal enclosure provided temperature scanning of the MEMS DSC device at time rates as high as 6 °C/min in the range of 10-90 °C with power consumption lower than 25 W. Using lysozyme prepared in 0.1 M Glycine-HCl buffer (pH 2.5) for purposes of demonstration, the device output was monitored while the sample and reference chambers, respectively filled with lysozyme and buffer, were scanned in a temperature range of 25-75 °C at a constant rate of 5 °C/min.

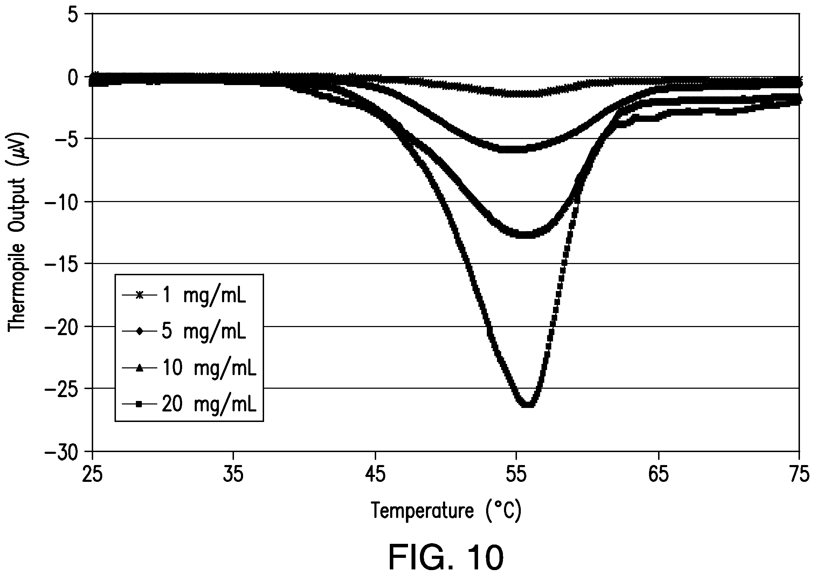

The thermopile output voltage as a function of temperature, corrected by baseline subtraction, was measured at varying protein concentrations ranging from 1 to 20 mg/mL (Fig. 10). It was observed that the device output exhibited a concentration-dependent minimum within a certain temperature range, reflecting the endothermic nature of protein unfolding processes. Notably, the unfolding of lysozyme was detectable at 1 mg/mL, representing a significant improvement over the previously reported MEMS DSC device.

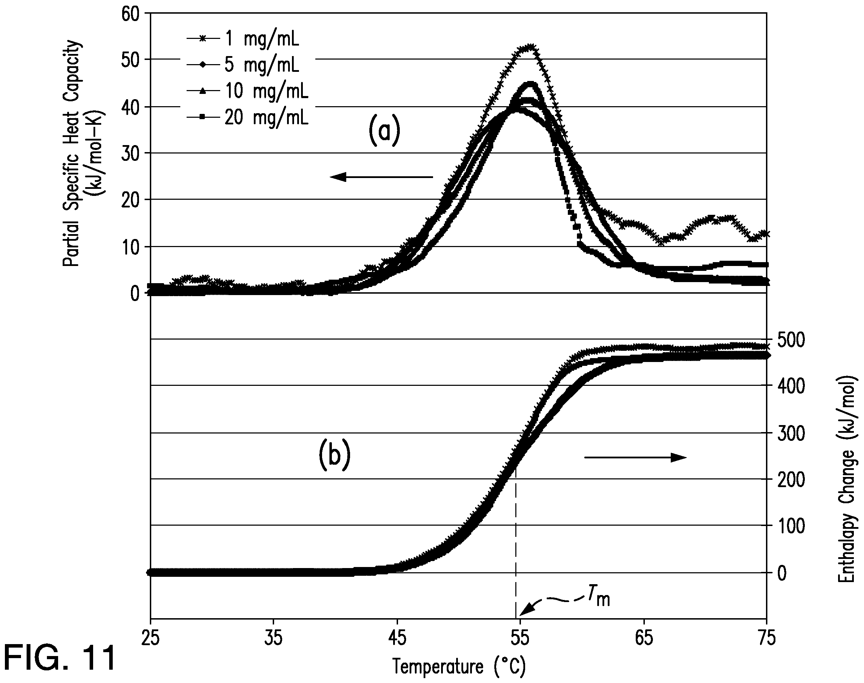

Furthermore, the differential heat capacity between the chambers was computed from the differential voltage measurement (Fig. 10) using calibrated device sensitivity (4.0 mV/mW), allowing the thermodynamic properties of lysozyme to be obtained during its unfolding process, such as partial specific heat capacity (c) (Fig. 11a), the total change of molar enthalpy (i.e., enthalpy per mole of lysozyme) ($\Delta H$), and melting temperature ($T_m$, defined as the temperature at which the change of molar enthalpy achieves 50% of $\Delta H$) (Fig. 11b). Despite the amplitude difference of device output at various protein concentrations, they all yielded consistent estimates of the thermodynamic properties associated with the protein unfolding process. In particular, the profile shape of $c$ was generally not influenced by protein concentration, and $\Delta H$ was consistently determined to be approximately 450 kJ/mol with a corresponding melting temperature $T_m$ of approximately 55 °C. These results agree well with published data, which are typically in the range $\Delta H$ = 377-439 kJ/mol and $T_m$ = 55-58.9 °C for lysozyme, demonstrating the potential utility of the MEMS DSC device disclosed herein for biomolecular characterization with significantly reduced sample consumption at practically relevant protein concentrations.

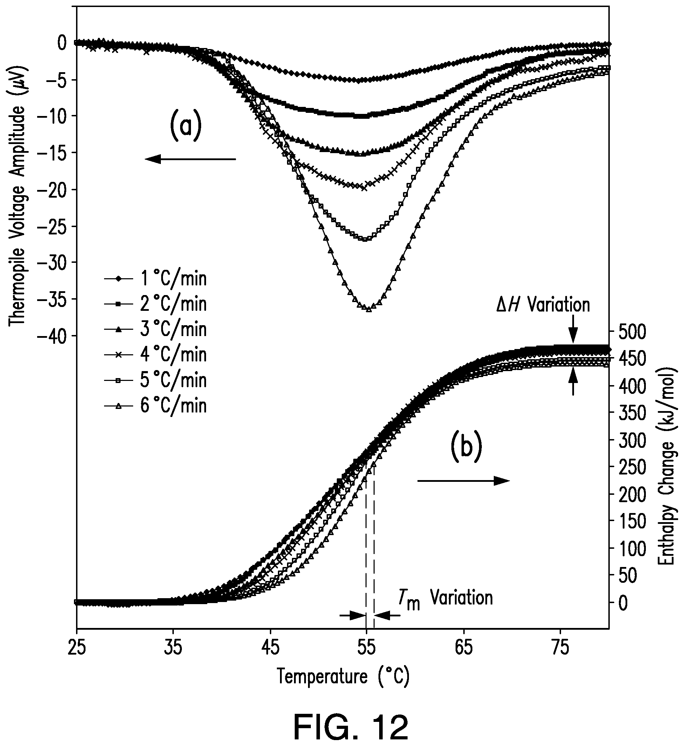

The effects of the temperature scanning rate on DSC measurements were also investigated. Using 20 mg/mL lysozyme prepared in 0.1 M Glycine-HCl buffer (pH 2.5) for example, the unfolding of lysozyme at temperature scanning rates were varied from 1-6 °C/min. The thermopile output voltage (again corrected by baseline subtraction) (Fig. 12a) exhibited a consistent dip in the same temperature range for protein unfolding as indicated above, with an amplitude increasing with the temperature scanning rate. This is consistent with a larger heat flux resulting in a higher endothermic power through phase transformations.

These data were then used to compute the change of molar enthalpy (Fig. 12b). Although a slight shift in the device output could be observed (Fig. 12a) as temperature scanning rate increased, the thermodynamic properties associated with the protein unfolding process were found generally consistent, with a standard variation in $\Delta H$ of approximately 50 kJ/mol (i.e., $\pm$ 5% of the mean value of $\Delta H$) and a standard variation in $T_m$ of less than 1 °C (Fig. 12b). Notably, for temperature scanning at 1-5 °C/min, the $T_m$ values were almost the same. This demonstrates the measurement consistency using the MEMS DSC device of the disclosed subject matter, and indicates that a temperature scanning rate as high as 5 °C/min is adequate for the measurement of lysozyme unfolding.

Example 3. AC-DSC measurement

This Example illustrates the method of carrying out a AC-DSC measurement, as described above based on a microdevice presently disclosed. This MEMS AC-DSC approach can potentially enable measurements of low-abundance biomolecules with improved accuracy, as demonstrated by the application of the device to AC-DSC measurements of the unfolding of lysozyme.

*A. Principle*

AC-DSC can monitor the differential heat capacity, i.e., the heat capacity difference between a sample and a reference material, by varying the materials' temperatures at a specified constant rate via a thermally isolated enclosure equipped with temperature control functionalities, superimposed with a temporally periodic variation via identical AC modulation heating applied to the sample and reference (Fig. 3). The differential heat capacity can be obtained by the measurement of the differential temperature, i.e., the temperature difference between the sample and reference materials.

*B. Fabrication of the Microdevice, System Setup and Calibration*

The AC-DSC measurement was carried out using a microdevice schematically depicted in Fig. 1 and fabricated according to the procedure described in Example 1. While other device parameters, including the dimension and volume of the chambers, thickness of polyimide paraphragms, and characteristics of the microheaters and temperature sensors, are largely the same as those of the microdevice described in Example 1, the Sb-Bi thermopile used in this Example includes 100 junctions rather than 50 junctions in Example 1.

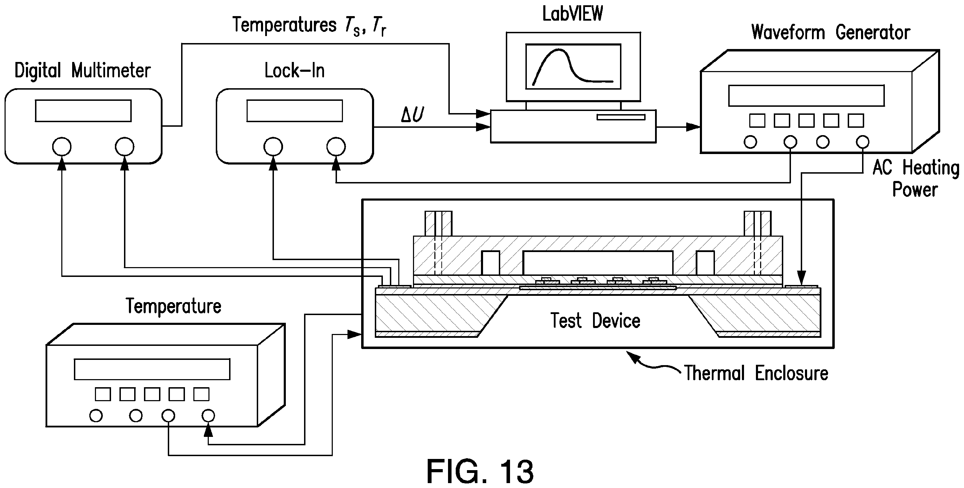

The DSC measurement system was configured similarly to that of Example 2. The microdevice was also placed in a thermal enclosure built in-house. The temperature of the sample stage in the thermal enclosure was controlled in closed-loop via a proportional-integral-derivative (PID) algorithm implemented by a commercial temperature controller (Lakeshore 331). The on-chip microheaters driven by a DC power supply (Agilent E3631A) were used to generate a constant differential power input, while for modulated heating, a square-wave AC voltage generated by a waveform generator (Agilent 33220A) was applied (Fig. 13). The temperature sensors were used to detect the real-time temperature inside each of the calorimetric chambers by a digital multimeter (Agilent 34410A). During device calibration, the thermopile output voltage was measured by a nanovoltmeter (Agilent 34420A), while during AC-DSC measurement, the amplitude and phase of thermopile voltage were measured by a lock-in amplifier (Stanford Research Systems SR830) referenced by the same AC modulation square wave from the waveform generator. The AC-DSC measurement was fully automated through a LabVIEW program.

The methods for calibrating the DC performance of the MEMS device were substantially the same as described in Example 2. The baseline in device output, i.e., the thermopile voltage with no differential power input during temperature scanning, was measured with both chambers filled with buffer solutions. During calibration of the device's modulation frequency dependence and AC-DSC measurements, the sample chamber was filled with a biological sample solution while the reference chamber was filled with the buffer solution. Biological sample and buffer solutions were degassed with a vacuum pump built in-house and then introduced into the device's calorimetric chambers with micropipettes.

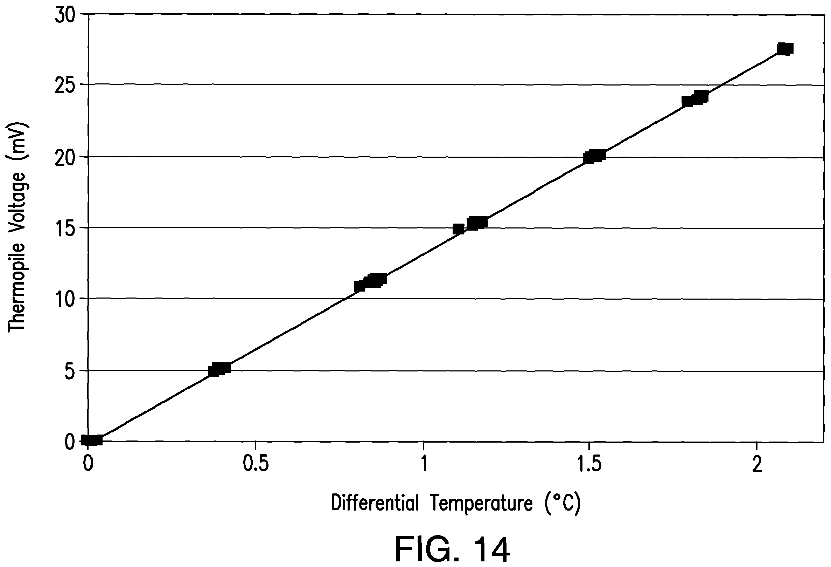

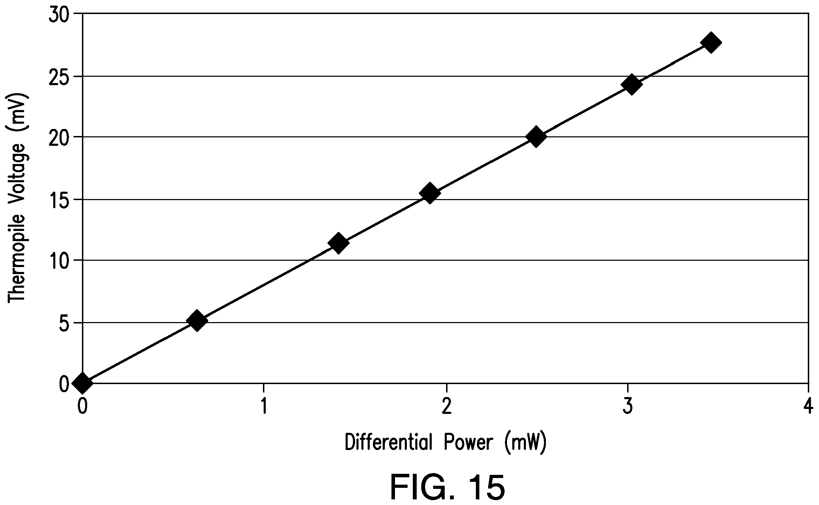

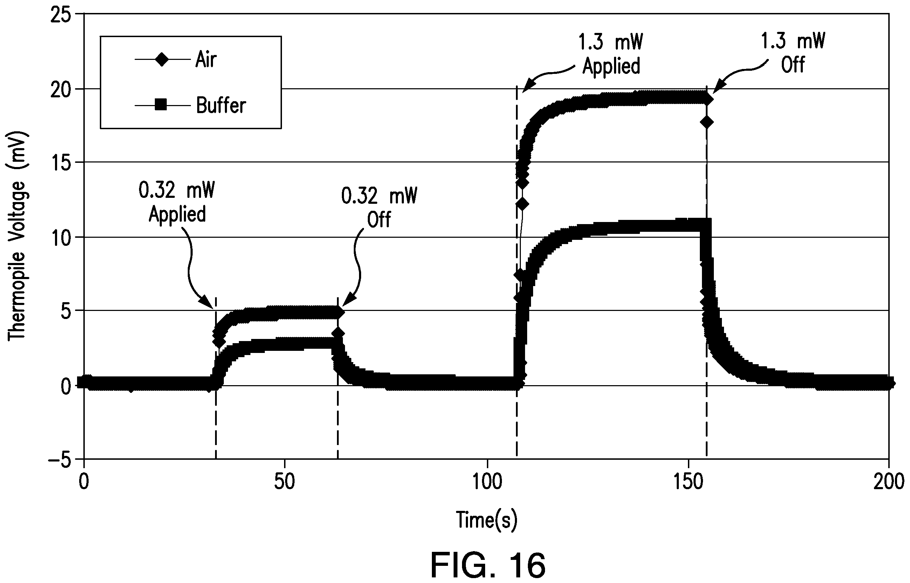

The thermopile in the MEMS device was first calibrated, and the results showed that 100-junction thermopile had a sensitivity of 13.0 mV/°C (Fig. 14), corresponding to a Seebeck coefficient of (per Sb-Bi thermoelectric junction) of approximately 130 $\mu$V/°C. The steady-state response of the device to a constant differential power was then measured, and exhibited a highly linear relationship with a DC responsivity of 8.0 mV/mW (Fig. 15). These results were consistent with calibration results from the 50-junction Sb-Bi thermopile in Example 2. Additionally, the transient response of the device was determined. The calorimetric chambers, both of which were filled either with air or with 0.1 M Glycine-HCl buffer (pH 2.5), were subjected to a step differential power (0.32 or 1.30 mW). Results from these measurements are shown in Fig. 16. The dependence of the thermopile voltage on time can be represented by a first order exponential increase. The thermal time constant thus obtained was 0.8 s when the chambers were filled with air, and 2.0 s when they were filled with buffer solution. These values were independent of the applied differential power, and were smaller than conventional AC calorimetric measurements.

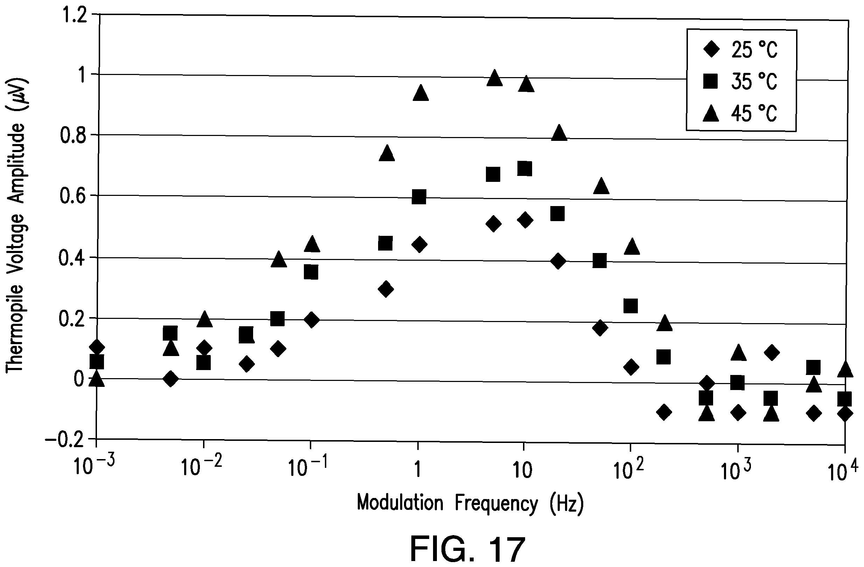

Further, the modulation frequency dependence of the device response to the applied differential power was investigated. To better simulate the application for AC-DSC measurement of protein unfolding process, the sample chamber was filled with lysozyme (20 mg/mL, prepared in 0.1 M Glycine-HCl, pH 2.5) as a sample, while the reference chamber was filled with Glycine-HCl buffer. The chambers were maintained at a constant temperature (25, 35, or 45°C), and subjected to AC heating (voltage amplitude: 1 V). The dependence of the thermopile voltage amplitude on the modulation frequency, corrected by baseline subtraction, is shown in Fig. 17. It can be seen that the thermopile voltage increased with temperature at almost all modulation frequencies, which can be explained by the temperature-dependence of the protein's heat capacity. Also, the device output (and hence sensitivity) appear greatest in a modulation frequency range of 0.5 to 20 Hz (Fig. 17), suggesting a reduced heat loss to the ambient by choice of modulation frequency. Therefore, modulation frequencies in this range were used below in calorimetric measurements of protein unfolding processes, as further described below.

*C. AC-DSC Measurements*

The MEMS AC-DSC device calibrated above was used to measure the thermal behavior of protein unfolding. Using lysozyme at different concentrations (10 and 20 *mg/mL,* prepared in 0.1 M Glycine-HCl buffer, pH 2.5) for example, the temperature of the calorimetric chambers was varied from 25 to 82°C at a rate of 5°C/min in combination with AC modulation via a heating voltage amplitude of 3.5 V at a constant frequency (1, 5, or 10 Hz). The periodic temperature variation resulting from the AC modulation heating had an amplitude of approximately 0.2 °C.

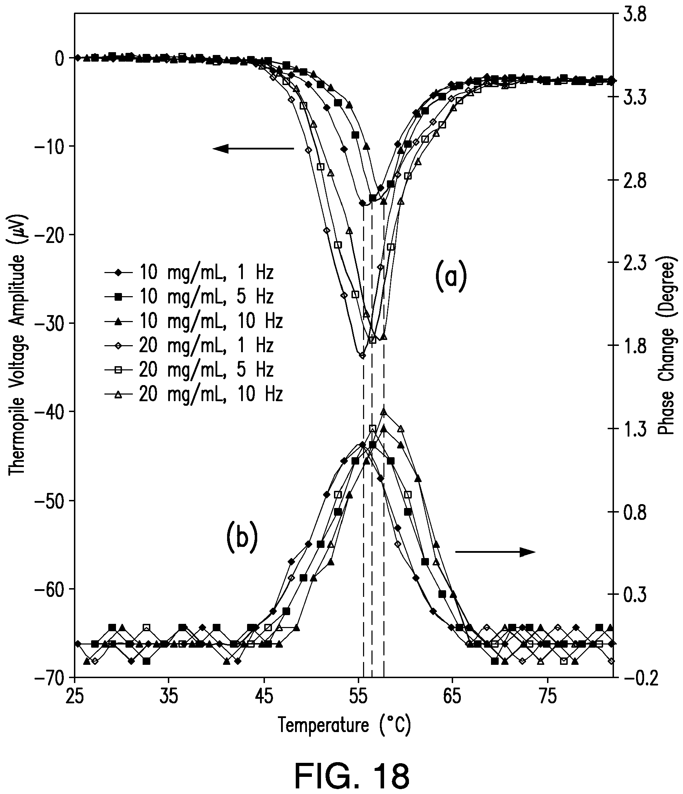

The measured thermopile voltage amplitude (Fig. 18a), again corrected by baseline subtraction, showed a concentration-dependent dip during the unfolding process, consistent with the endothermic nature of protein unfolding. In addition, despite differences in thermopile voltage amplitude for different lysozyme concentrations, the phase of the thermopile voltage (Fig. 18b) had identical changes throughout the unfolding process, which remained unchanged in the native and unfolded states when a two-state protein denaturation model was adopted. Furthermore, both the amplitude and phase changes of the thermopile voltage exhibited clear shifts with the modulation frequency, which could be attributed to the unsynchronized thermal response of the device to AC heating. However, at a fixed protein concentration, the profiles of the thermopile voltage amplitude and phase changes had virtually the same shape at different modulation frequencies, showing the suitability of the frequency choice for the MEMS-based AC-DSC measurements.

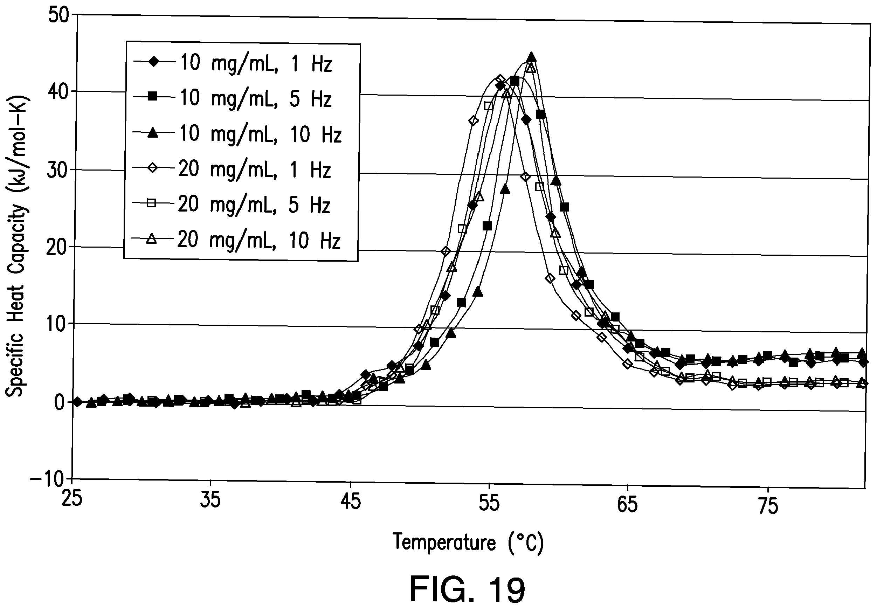

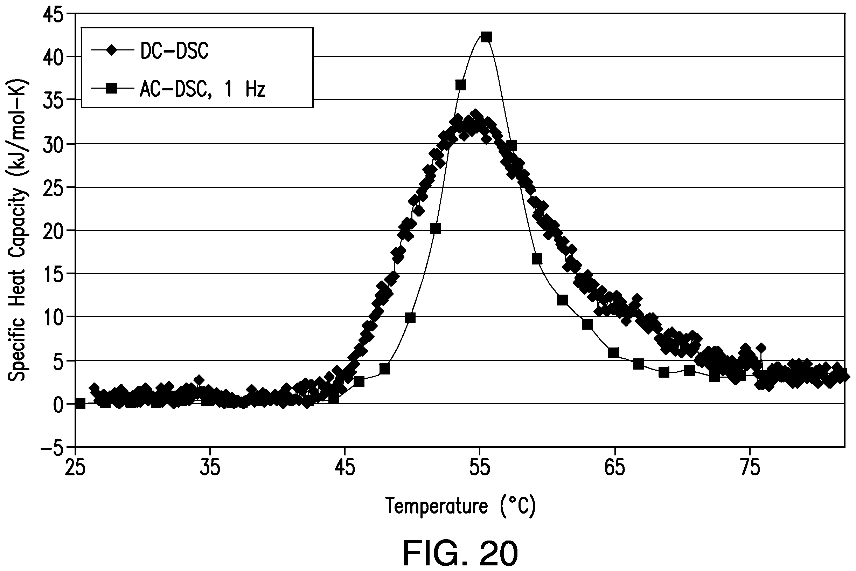

The apparent melting temperature ($T_m$) of lysozyme during an unfolding process, i.e., the temperature at which the phase change of device output reaches its peak, was found to be in the range of 55-58°C (Fig. 18), depending on the modulation frequency. Meanwhile, the specific heat capacity (*c*) of the protein as a function of temperature can be computed from the thermopile voltage amplitude (Fig. 19). It be seen that although there again existed a slight shift in c throughout the unfolding process induced by modulation frequency, the profile shape of c was not influenced by the modulation frequency. Moreover, at each modulation frequency, the calculated value of c does not differ significantly at different protein concentrations (Fig. 19), showing that the AC-DSC measurements were accurate. There was also a difference in the specific heat capacity (Δ*c*) between the protein's native and unfolded states, which was calculated consistently to be 3.0 kJ/mol•K regardless of the modulation frequency. These results are consistent with established results from DC-DSC characterization. Compared with DC-DSC measurements in the same MEMS device without using temperature modulation (Fig. 20), AC-DSC can offer much reduced noise levels and improved measurement accuracies, and therefore holds the potential to enable characterization of biomolecular interactions at low concentrations

Example 4. MEMS-based Isothermal Titration Calorimetry

This Example illustrates the method of performing isothermal titration calorimetric measurement, as described above based on a microdevice disclosed herein.

*A. Principle*

Consider a solution-phase biochemical reaction $n_1A + n_2B \leftrightarrow C + \Delta H,$ where A and B are reactants (e.g., a ligand and a sample, respectively) and C is a product. The reaction is accompanied by a change of enthalpy $\Delta H$. In ITC, the ligand can be titrated, or successively added in known aliquots, into the sample, while the reaction heat is measured. This data can then used to determine the thermodynamic properties of the reaction, including the equilibrium binding constant $K_B$ = [C]/[A][B] (the square brackets denote the equilibrium concentration of the species), stoichiometry $N = n_1/n_2$, and enthalpy change ($\Delta H$).

*B. Device Setup and Calibration*

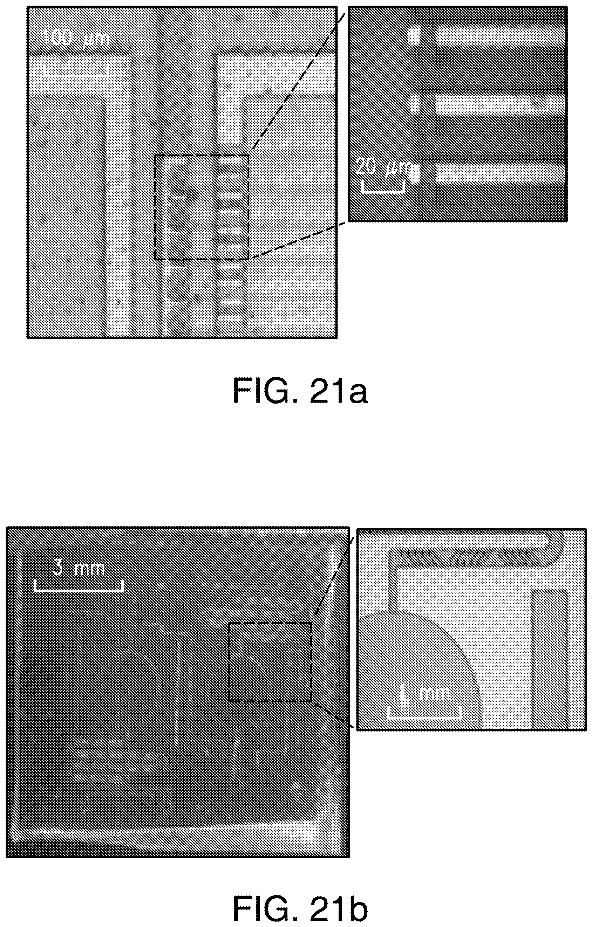

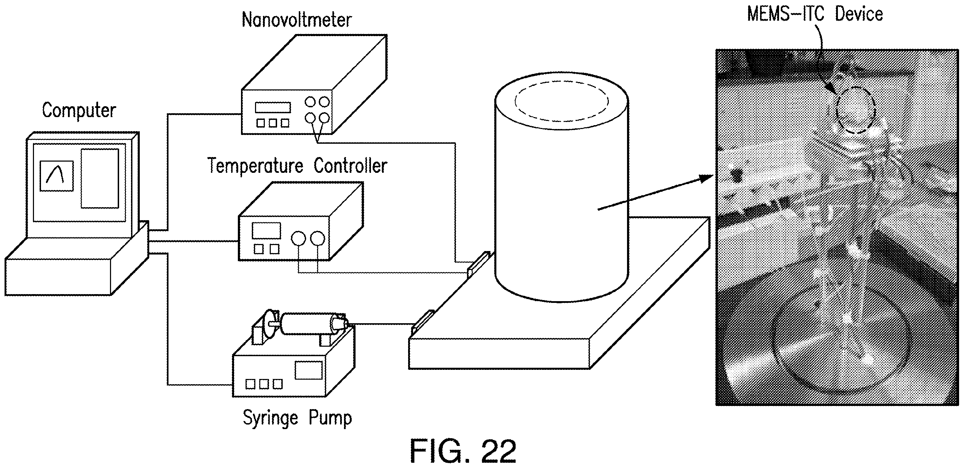

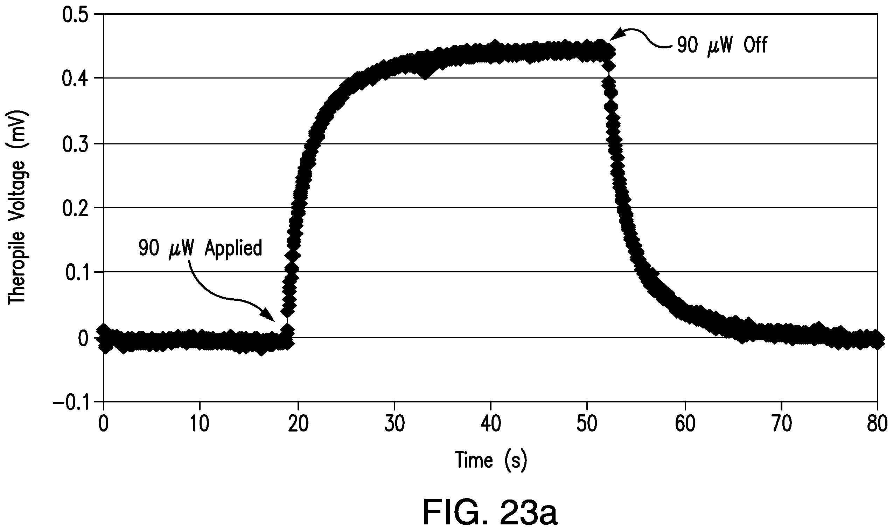

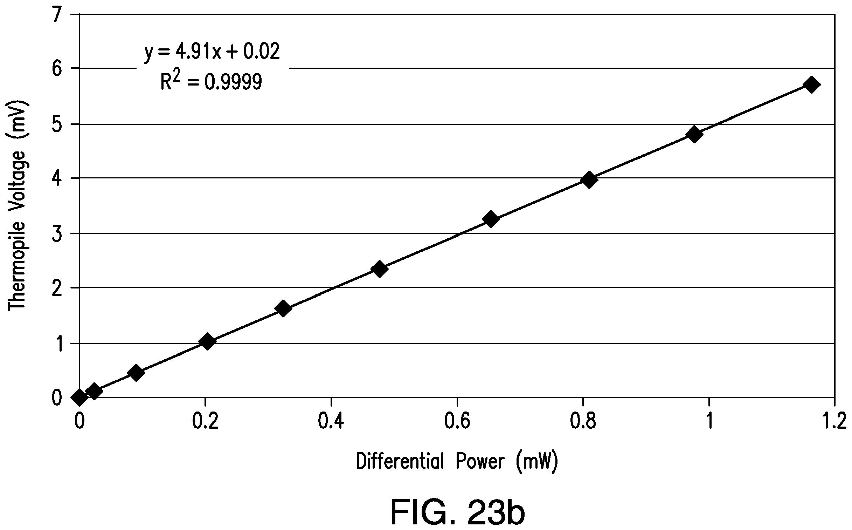

The MEMS-ITC device as schematically shown in Fig. 4 was used. Briefly, the device integrates two identical polydimethylsiloxane (PDMS) microchambers each (1 $\mu$L) situated on a freestanding polyimide thin film substrate and surrounded by air cavities for thermal isolation. The chambers are integrated with an antimony-bismuth (Sb-Bi) thermopile and connected to the inlets through an introduction channel which includes a passive chaotic mixer having herringbone-shaped ridges in the ceiling of a serpentine channel to generate a chaotic flow pattern that induces mixing of the incoming liquid streams. Some of the features of the MEMS-ITC device used were shown in Fig. 21. For ITC measurements, the two reactants, herein referred to as the ligand and sample for purpose of illustration, were introduced into the device and first mixed in the introduction channel, and then enter the sample calorimetric chamber, where the reaction is completed. In the meantime, the sample and pure buffer (devoid of the ligand) were also introduced into the device, becoming mixed before entering the reference calorimetric chamber. The differential temperature between the chambers were measured using the integrated thermopile, and was used to determine the thermal power from the reaction, from which the thermodynamic reaction parameters were calculated. The device was placed in a low-noise, temperature-controlled thermal enclosure (Fig. 22) where the thermopile output was measured. The sample and ligand were introduced using syringe pumps. Calibration experiments indicated that the device had a thermal time constant of 1.5 s with a linear steady-state thermal response (responsivity: 4.9 mV/mW) (Fig. 23).

*C. ITC Measurement*

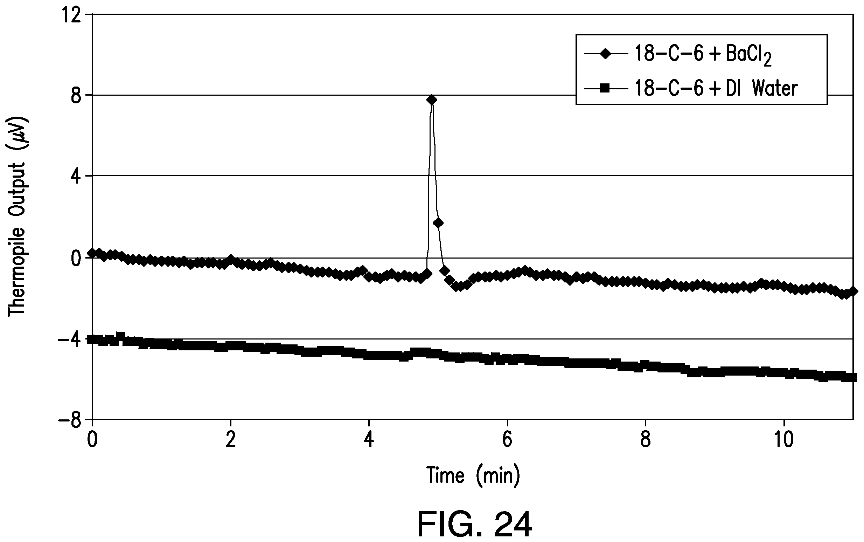

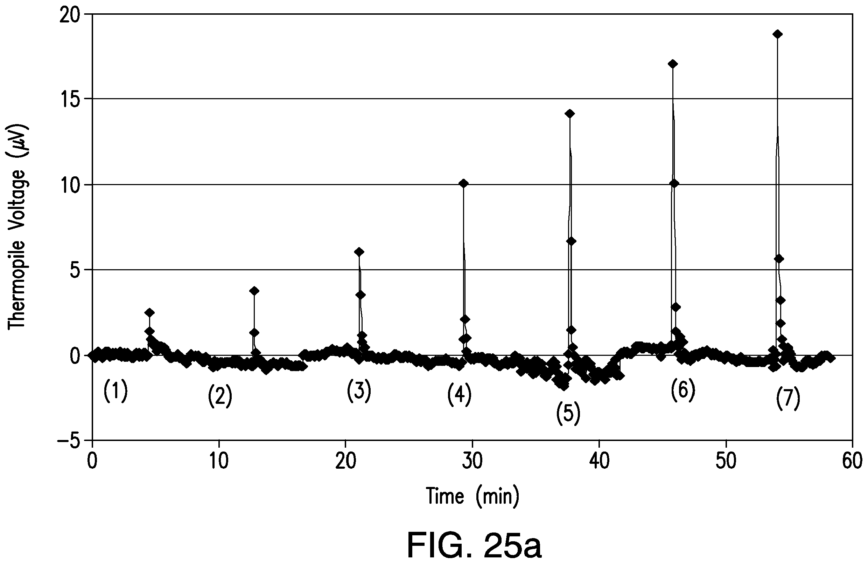

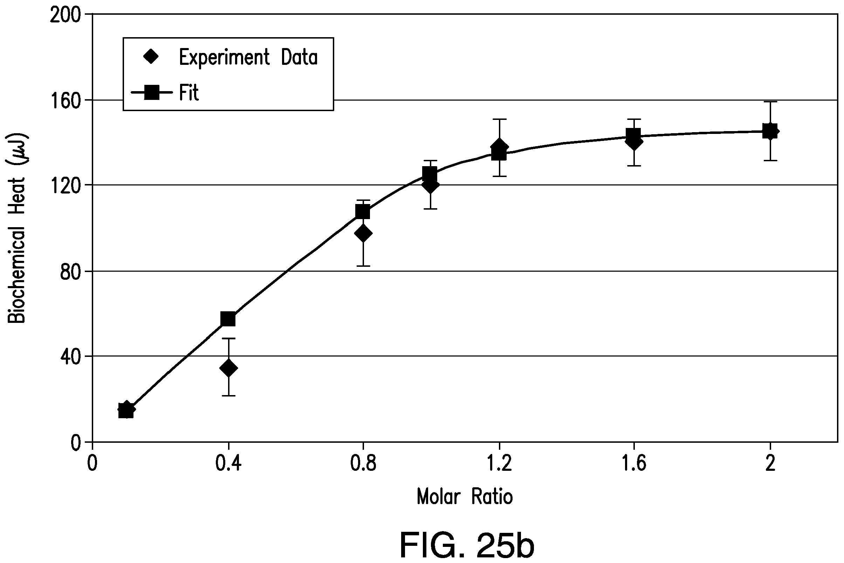

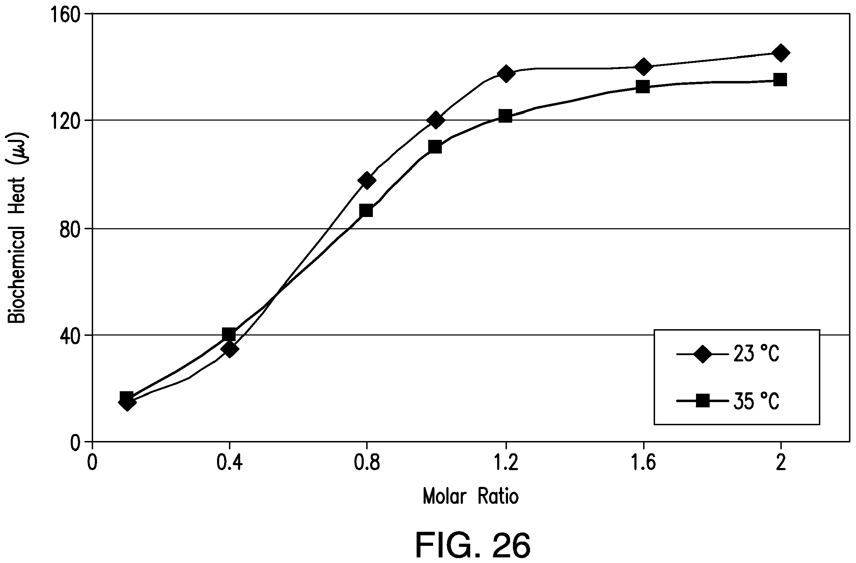

The device was used for ITC measurements of a model reaction system consisting of 18-C-6 and $BaCl_2$. The time-resolved device output exhibited a reaction-specific spike (Fig. 24) upon introduction of 5 mM $BaCl_2$ and 4 mM 18-C-6 (each 0.5 $\mu$L) with no appreciable delay, indicating full mixing of the reactants. Using titrations with the molar ratio ($BaCl_2$/18-C-6) varying from 0.1 to 2 ((1) 0.1, (2) 0.4, (3) 0.8, (4) 1.0, (5) 1.2, (6) 1.6, (7) 2.0), the baseline-subtracted device output demonstrated spikes consistent with the titration reactions, and allowed construction of a binding isotherm (Fig. 25). ITC measurements were performed at 23 and 35°C (Fig. 26), and the resulting isotherms were used to compute $K_B$ and $\Delta H$, which decrease with temperature (See Table 1 below). These results demonstrated that the MEMS-ITC device as disclosed affords detectable sample concentrations approaching those of conventional instruments (ca. 1 mM) with roughly three orders of magnitude reduction in volume.

Table 1. Temperature-dependent thermodynamic properties: the stoichiometry (N), binding affinity (KB) and enthalpy change (H), of the binding of 18-C-6 and BaCl2 at two temperatures

| Temperature (°C) | N | $K_B(M^{-1})$ | $\Delta H$(kJ/mol) |
|---|---|---|---|
| 23 | 1.0 | $6.0\times10^{-3}$ | 30.0 |
| 35 | 1.05 | $2.8\times10^{-3}$ | 27.8 |

The description herein merely illustrates the principles of the disclosed subject matter. Various modifications and alterations to the described embodiments will be apparent to those skilled in the art in view of the teachings herein. Further, it should be noted that the language used herein has been principally selected for readability and instructional purposes, and can not have been selected to delineate or circumscribe the inventive subject matter. Accordingly, the disclosure herein is intended to be illustrative, but not limiting, of the scope of the disclosed subject matter.

**Claims**

1. A microdevice for calorimetric measurement, comprising:

a first thermally isolated microchamber (410) configured to receive a first substance using a first introduction channel (430); a second thermally isolated microchamber (420) configured to receive a second substance using a second introduction channel (440) and a thin film substrate (450, 150); wherein the first thermally isolated microchamber and the second thermally isolated microchamber are identical in volume and configuration, and arranged side by side, each supported on the thin film substrate, wherein the thin film substrate has a first side constituting a floor (153) of the first and second thermally isolated microchambers and a second side (151) opposing the first side, and

wherein the thin film substrate comprises a thermoelectric sensor (170) located under each of the first and second thermally isolated microchambers and configured to measure the temperature differential between the first and second thermally isolated microchambers; and wherein the thin film substrate includes a polymeric diaphragm (151, 152, 153) made of a material having a glass transition temperature greater than 150° and thermal decomposition temperature greater than 250° C; said microdevice for calorimetric measurement being **characterised in that** each of the first introduction channel and the second introduction channel comprises at least a portion having a serpentine shape.

2. The microdevice of claim 1, wherein a thermoelectric sensitivity per thermocouple is greater than 80 $\mu$V/°C).

3. The microdevice of claim 1, wherein the thermoelectric sensor is configured as a thin layer thermopile (170) including a plurality of elongated segments of dissimilar materials, adjacent segments of dissimilar materials being joined together at opposite ends, thereby forming thermocouple junctions (171, 172).

4. The microdevice of claim 3, wherein the dissimilar thermoelectric materials comprise n-type and p-type bismuth telluride, and n-type and p-type antimony telluride.

5. The microdevice of claim 3, wherein the dissimilar materials comprise antimony and bismuth.

6. The microdevice of claim 1, wherein the material of the polymeric diaphragm has a tensile strength of greater than 55 MPa or Young's Modulus greater than 500 MPa.

7. The microdevice of claim 1, wherein the material for the polymeric diaphragm is selected from polyimide, parylene, polyester, and polytetrafluoroethylene.

8. The microdevice of claim 3, wherein the thin film substrate further comprises:

a first microheater (180) and a first temperature sensor (190), each aligned under the first thermally isolated microchamber; and
a second microheater (180) and a second temperature sensor (190), each aligned under the second thermally isolated microchamber.

9. The microdevice of claim 8, wherein the thermocouple junctions (171, 172) of the thermoelectric sensor are located near the center of each of the first and second thermally insulated chambers, and vertically aligned with the first temperature sensor and the second temperature sensor, respectively.

10. The microdevice of claim 8, wherein the thermopile (170) is located in a different horizontal plane than and insulated from each of the first and second microheaters and the first and second temperature sensors.

11. The microdevice of claim 1, wherein each of the first thermally isolated microchamber and the second thermally isolated microchamber is defined by a surrounding wall made from polydimethylsiloxane (PDMS).

12. The microdevice of claim 1, wherein the thin film substrate includes a top layer (153) contacting each of the first thermally isolated microchamber and the second thermally isolated microchamber, the top layer made from a mixture of PDMS and the material from which the polymeric diaphragm is made.

13. The microdevice of claim 8, wherein each of the first microheater (180), the first temperature sensor (190), the second microheater (180), and the second temperature sensor (190) is in a form of a thin layer of deposited metal/alloy or metals/alloys impregnated in the thin film substrate.

14. The microdevice of claim 13, wherein each of the first and second microheaters (180) are patterned to provide uniform heating in each of the first and second thermally isolated microchambers.

15. The microdevice of claim 1, further comprising a silicon wafer substrate (180) contacting the second side of the thin film substrate.

16. The microdevice of claim 15, wherein the area on the second side of the thin film substrate corresponding to a cross section of each of the first and second thermally isolated microchambers does not contact any other material except air.

17. The microdevice of claim 1, wherein said a first introduction channel and second introduction channel are each configured to provide passive chaotic mixing for a solution flowing through the first or the second introduction channel.

18. The microdevice of claim 17, wherein each of the first introduction channel and a second introduction channel comprises internal ridges (434, 444) configured to create turbulence in the solution flowing through the first or the second introduction channel.

**Patentansprüche**

1. Mikrovorrichtung zur kalorimetrischen Messung, umfassend:

eine erste wärmeisolierte Mikrokammer (410), die zum Aufnehmen einer ersten Substanz unter Verwendung eines ersten Einführungskanals (430) ausgebildet ist;
eine zweite wärmeisolierte Mikrokammer (420), die zum Aufnehmen einer zweiten Substanz unter Verwendung eines zweiten Einführungskanals (440) ausgebildet ist; und
ein Dünnfilmsubstrat (450, 150);
wobei die erste wärmeisolierte Mikrokammer und die zweite wärmeisolierte Mikrokammer bezüglich des Volumens und des Aufbaus identisch sind und nebeneinander angeordnet sind sowie jeweils auf dem Dünnfilmsubstrat geträgert sind,
wobei das Dünnfilmsubstrat eine erste Seite, die einen Boden (153) der ersten und der zweiten wärmeisolierten Mikrokammer bildet, und eine zweite Seite (151) gegenüber der ersten Seite aufweist, und
wobei das Dünnfilmsubstrat einen thermoelektrischen Sensor (170) umfasst, der sich unter jeder der ersten und der zweiten wärmeisolierten Mikrokammer befindet und zum Messen der Temperaturdifferenz zwischen der ersten und der zweiten wärmeisolierten Mikrokammer ausgebildet ist; und
wobei das Dünnfilmsubstrat eine polymere Membran (151, 152, 153) umfasst, die aus einem Material mit einer Glasübergangstemperatur von mehr als 150 ° und einer Wärmezersetzungstemperatur von mehr als 250 °C hergestellt ist; wobei die Mikrovorrichtung zur kalorimetrischen Messung **dadurch gekennzeichnet ist, dass** jeder des ersten Einführungskanals und des zweiten Einführungskanals mindestens einen Abschnitt mit einer Serpentinenform umfasst.

2. Mikrovorrichtung nach Anspruch 1, bei der ein thermoelektrisches Ansprechvermögen pro Thermoelement mehr als 80 $\mu$V/°C beträgt.

3. Mikrovorrichtung nach Anspruch 1, bei welcher der thermoelektrische Sensor als eine Dünnschichtthermosäule (170) ausgebildet ist, die eine Mehrzahl von länglichen Segmenten aus verschiedenen Materialien umfasst, wobei angrenzende Segmente der verschiedenen Materialien an gegenüberliegenden Enden miteinander verbunden sind, wodurch Thermoelementübergänge (171, 172) gebildet werden.

4. Mikrovorrichtung nach Anspruch 3, bei der die verschiedenen thermoelektrischen Materialien n-Typ- und p-Typ-Bismuttellurid und n-Typ- und p-Typ-Antimontellurid umfassen.

5. Mikrovorrichtung nach Anspruch 3, bei der die verschiedenen Materialien Antimon und Bismut umfassen.

6. Mikrovorrichtung nach Anspruch 1, bei der das Material der polymeren Membran eine Zugfestigkeit von mehr als 55 MPa oder einen Young'schen Modul von mehr als 500 MPa aufweist.

7. Mikrovorrichtung nach Anspruch 1, bei der das Material für die polymere Membran aus Polyimid, Parylen, Polyester und Polytetrafluorethylen ausgewählt ist.

8. Mikrovorrichtung nach Anspruch 3, bei der das Dünnfilmsubstrat ferner umfasst:

   eine erste Mikroheizeinrichtung (180) und einen ersten Temperatursensor (190), die jeweils unter der ersten wärmeisolierten Mikrokammer ausgerichtet sind; und
   eine zweite Mikroheizeinrichtung (180) und einen zweiten Temperatursensor (190), die jeweils unter der zweiten wärmeisolierten Mikrokammer ausgerichtet sind.

9. Mikrovorrichtung nach Anspruch 8, bei der die Thermoelementübergänge (171, 172) des thermoelektrischen Sensors in der Nähe der Mitte von jeder der ersten und zweiten wärmeisolierten Kammer angeordnet sind und vertikal mit dem ersten Temperatursensor bzw. dem zweiten Temperatursensor ausgerichtet sind.

10. Mikrovorrichtung nach Anspruch 8, bei der die Thermosäule (170) in einer anderen horizontalen Ebene als jede(r) der ersten und zweiten Mikroheizeinrichtung und des ersten und zweiten Temperatursensors angeordnet ist und bezüglich jeder bzw. jedem der ersten und zweiten Mikroheizeinrichtung und des ersten und zweiten Temperatursensors isoliert ist.

11. Mikrovorrichtung nach Anspruch 1, bei der jede der ersten wärmeisolierten Mikrokammer und der zweiten wärmeisolierten Mikrokammer durch eine umgebende Wand festgelegt ist, die aus Polydimethylsiloxan (PDMS) hergestellt ist.

12. Mikrovorrichtung nach Anspruch 1, bei der das Dünnfilmsubstrat eine oberste Schicht (153) umfasst, die jede der ersten wärmeisolierten Mikrokammer und der zweiten wärmeisolierten Mikrokammer kontaktiert, wobei die oberste Schicht aus einem Gemisch von PDMS und dem Material hergestellt ist, aus dem die polymere Membran hergestellt ist.

13. Mikrovorrichtung nach Anspruch 8, bei der jede(r) der ersten Mikroheizeinrichtung (180), des ersten Temperatursensors (190), der zweiten Mikroheizeinrichtung (180) und des zweiten Temperatursensors (190) in einer Form einer Dünnschicht aus einem abgeschiedenen Metall/einer abgeschiedenen Legierung oder Metallen/Legierungen, die in das Dünnfilmsubstrat imprägniert sind, vorliegt.

14. Mikrovorrichtung nach Anspruch 13, bei der jede der ersten und zweiten Mikroheizeinrichtung (180) so strukturiert ist, dass ein einheitliches Heizen in jeder der ersten und zweiten isolierten Mikrokammer bereitgestellt wird.

15. Mikrovorrichtung nach Anspruch 1, die ferner ein Siliziumwafersubstrat (180) umfasst, das die zweite Seite des Dünnfilmsubstrats kontaktiert.

16. Mikrovorrichtung nach Anspruch 15, bei der die Fläche auf der zweiten Seite des Dünnfilmsubstrats, die einem Querschnitt von jeder der ersten und zweiten wärmeisolierten Mikrokammer entspricht, keinerlei anderes Material ausgenommen Luft kontaktiert.

17. Mikrovorrichtung nach Anspruch 1, bei welcher der erste Einführungskanal und der zweite Einführungskanal jeweils so ausgebildet sind, dass sie ein passives chaotisches Mischen für eine Lösung bereitstellen, die durch den ersten oder den zweiten Einführungskanal strömt.

18. Mikrovorrichtung nach Anspruch 17, bei der jeder des ersten Einführungskanals und des zweiten Einführungskanals interne Rippen (434, 444) umfasst, die so ausgebildet sind, dass sie eine Turbulenz in der Lösung erzeugen, die durch den ersten oder den zweiten Einführungskanal strömt.

## Revendications

1. Microdispositif de mesure calorimétrique, comprenant :

   une première microchambre thermiquement isolée (410) configurée pour recevoir une première substance à l'aide d'un premier canal d'introduction (430) ;
   une seconde microchambre thermiquement isolée (420) configurée pour recevoir une seconde substance à l'aide d'un second canal d'introduction (440) ; et
   un substrat à film mince (450, 150) ;
   dans lequel la première microchambre thermiquement isolée et la seconde microchambre thermiquement isolée sont identiques en volume et configuration, et agencées côte à côte, chacune supportée sur le substrat à film mince, dans lequel le substrat à film mince a un premier côté constituant un plancher (153) sur les première et seconde microchambres thermiquement isolées et un second côté (151) opposé au premier côté, et
   dans lequel le substrat à film mince comprend un capteur thermoélectrique (170) situé sous chacune des première et seconde microchambres thermiquement isolées et configuré pour mesurer le différentiel de température entre les première et seconde microchambres thermiquement isolées ; et
   dans lequel le substrat à film mince inclut un diaphragme polymérique (151, 152, 153) constitué d'un matériau ayant une température de transition vitreuse plus grande que 150° et une température de décomposition thermique plus grande que 250 °C ; ledit microdispositif de mesure calorimétrique étant **caractérisé en ce que** chacun du premier canal d'introduction et du second canal d'introduction comprend au moins une portion ayant une forme de serpentin.

2. Microdispositif selon la revendication 1, dans lequel une sensibilité thermoélectrique par thermocouple est plus grande que 80 μV/°C.

3. Microdispositif selon la revendication 1, dans lequel le capteur thermoélectrique est configuré comme une thermopile à couche mince (170) incluant une pluralité de segments allongés de matériaux dissemblables, des segments adjacents de matériaux dissemblables étant joints ensemble à des extrémités opposées, formant ainsi des jonctions de thermocouple (171, 172).

4. Microdispositif selon la revendication 3, dans lequel les matériaux thermoélectriques dissemblables comprennent du tellurure de bismuth de type n et de type p, et du tellurure d'antimoine de type n et de type p.

5. Microdispositif selon la revendication 3, dans lequel les matériaux dissemblables comprennent de l'antimoine et du bismuth.

6. Microdispositif selon la revendication 1, dans lequel le matériau du diaphragme polymérique a une résistance à la traction plus grande que 55 MPa ou un module d'Young plus grand que 500 MPa.

7. Microdispositif selon la revendication 1, dans lequel le matériau pour le diaphragme polymérique est choisi parmi polyimide, parylène, polyester, et polytétrafluoroéthylène.

8. Microdispositif selon la revendication 3, dans lequel le substrat à film mince comprend en outre :

   un premier microchauffage (180) et un premier capteur de température (190), chacun aligné sous la première microchambre thermiquement isolée ; et
   un second microchauffage (180) et un second capteur de température (190), chacun aligné sous la seconde microchambre thermiquement isolée.

9. Microdispositif selon la revendication 8, dans lequel les jonctions de thermocouple (171, 172) du capteur thermoélectrique sont situées près du centre de chacune des première et seconde chambres thermiquement isolées, et verticalement alignées avec le premier capteur de température et le second capteur de température, respectivement.

10. Microdispositif selon la revendication 8, dans lequel la thermopile (170) est située dans un plan horizontal différent de et isolée de chacun des premier et second microchauffages et des premier et second capteurs de température.

11. Microdispositif selon la revendication 1, dans lequel chacune de la première microchambre thermiquement isolée et de la seconde microchambre thermiquement isolée est définie par une paroi environnante faite de polydiméthylsiloxane (PDMS).

12. Microdispositif selon la revendication 1, dans lequel le substrat à film mince inclut une couche de dessus (153) venant en contact avec chacune de la première microchambre thermiquement isolée et de la seconde microchambre thermiquement isolée, la couche de dessus étant faite d'un mélange de PDMS et du matériau duquel est fait le diaphragme polymérique.

13. Microdispositif selon la revendication 8, dans lequel chacun du premier microchauffage (180), du premier capteur de température (190), du second microchauffage (180), et du second capteur de température (190) se présente sous la forme d'une couche mince de métal/alliage ou métaux/alliages déposé(s) imprégné(s) dans le substrat à film mince.

14. Microdispositif selon la revendication 13, dans lequel chacun des premier et second microchauffages (180) est formé en motifs pour assurer un chauffage uniforme dans chacune des première et seconde microchambres thermiquement isolées.

15. Microdispositif selon la revendication 1, comprenant en outre un substrat à tranche de silicium (180) venant en contact avec le second côté du substrat à film mince.

16. Microdispositif selon la revendication 15, dans lequel l'aire sur le second côté du substrat à film mince correspondant à une coupe droite de chacune des première et seconde microchambres thermiquement isolées ne vient en contact avec aucun autre matériau à l'exception de l'air.

17. Microdispositif selon la revendication 1, dans lequel lesdits un premier canal d'introduction et second canal d'introduction sont chacun configurés pour assurer un mélange chaotique passif pour une solution circulant à travers le premier ou le second canal d'introduction.

18. Microdispositif selon la revendication 17, dans lequel chacun du premier canal d'introduction et d'un second canal d'introduction comprend des arêtes internes (434, 444) configurées pour créer une turbulence dans la solution s'écoulant à travers le premier ou le second canal d'introduction.

FIG. 1a

FIG. 1b

B–B':

121    130        120        140    122

185                                        195

180,190   170        151        160

153

FIG. 1c

FIG. 2a

FIG. 2b

FIG. 2c

EP 2 678 651 B1

FIG. 2d

FIG. 2e

19

FIG. 3

FIG. 4a

EP 2 678 651 B1

FIG. 4b

EP 2 678 651 B1

PDMS Structure

Calorimetric
Chambers

Air Gap

4 mm

**FIG. 5a**

Thermal Substrate

**FIG. 5b**

500 μm

Thermopile
(50 junctions)

Temperature

On–Chip Heater

Polyimide
Diaphragm

**FIG. 5c**

20 μm

Thermopile
Junctions

**FIG. 5d**

FIG. 6a

EP 2 678 651 B1

FIG. 6b

EP 2 678 651 B1

FIG. 7

EP 2 678 651 B1

FIG. 8

EP 2 678 651 B1

FIG. 9

FIG. 10

FIG. 11

FIG. 12

FIG. 13

EP 2 678 651 B1

FIG. 14

EP 2 678 651 B1

FIG. 15

EP 2 678 651 B1

FIG. 16

EP 2 678 651 B1

FIG. 17

EP 2 678 651 B1

FIG. 18

FIG. 19

Specific Heat Capacity (kJ/mol-K)

Temperature (°C)

DC-DSC

AC-DSC, 1 Hz

FIG. 20

FIG. 21a

FIG. 21b

FIG. 22

EP 2 678 651 B1

FIG. 23a

FIG. 23b

FIG. 24

EP 2 678 651 B1

FIG. 25a

EP 2 678 651 B1

FIG. 25b

FIG. 26

EP 2 678 651 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A MEMS differential scanning calorimeter for thermo-dynamic characterization of biomolecules. **B WANG et al.** IEEE 24TH INTERNATIONAL CONFERENCE ON MICRO ELECTRO MECHANICAL SYSTEMS (MEMS 2011). IEEE, 23 January 2011, 821-824